(19) Europäisches Patentamt
European Patent Office
Office européen des brevets

(11) EP 1 763 569 B1

(12) **EUROPÄISCHE PATENTSCHRIFT**

(45) Veröffentlichungstag und Bekanntmachung des Hinweises auf die Patenterteilung:
**17.01.2018 Patentblatt 2018/03**

(21) Anmeldenummer: **05748085.7**

(22) Anmeldetag: **13.06.2005**

(51) Int Cl.:
***C09K 19/02*** (2006.01) ***C09K 19/12*** (2006.01)
***C09K 19/30*** (2006.01) ***C09K 19/34*** (2006.01)
***C09K 19/44*** (2006.01)

(86) Internationale Anmeldenummer:
**PCT/EP2005/006311**

(87) Internationale Veröffentlichungsnummer:
**WO 2006/002747 (12.01.2006 Gazette 2006/02)**

(54) **FLÜSSIGKRISTALLMEDIUM UND DIESES ENTHALTENDE ELEKTROOPTISCHE ANZEIGE**

LIQUID CRYSTAL MEDIUM AND ELECTROOPTICAL DISPLAY CONTAINING SAME

SUPPORTS A CRISTAUX LIQUIDES ET AFFICHEUR ELECTRO-OPTIQUE CONTENANT DE TELS SUPPORTS

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **02.07.2004 DE 102004032325**

(43) Veröffentlichungstag der Anmeldung:
**21.03.2007 Patentblatt 2007/12**

(73) Patentinhaber: **Merck Patent GmbH**
**64293 Darmstadt (DE)**

(72) Erfinder:
- **KLASEN-MEMMER, Melanie**
  **67259 Heuchelheim (DE)**
- **SAITO, Izumi**
  **64285 Darmstadt (DE)**
- **PLACH, Herbert**
  **64291 Darmstadt (DE)**
- **TARUMI, Kazuaki**
  **64342 Seeheim-Jugenheim (DE)**

(56) Entgegenhaltungen:
**EP-A- 0 949 231** **EP-A- 1 245 660**
**EP-A- 1 362 839** **WO-A-89/02425**
**WO-A-92/11241** **WO-A-2004/035710**
**WO-A2-2004/076438**

- **PATENT ABSTRACTS OF JAPAN Bd. 2003, Nr. 10, 8. Oktober 2003 (2003-10-08) -& JP 2003 165977 A (DAINIPPON INK & CHEM INC), 10. Juni 2003 (2003-06-10)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft Flüssigkristallmedien und deren Verwendung in Flüssigkristallanzeigen sowie diese Flüssigkristallanzeigen, besonders Flüssigkristallanzeigen, die den ECB- (Electrically Controlled Birefringence) Effekt mit dielektrisch negativen Flüssigkristallen in einer homeotropen Ausgangsorientierung verwenden. Die erfindungsgemäßen Flüssigkristallmedien zeichnen sich durch eine besonders niedrige Schaltzeit in den erfindungsgemäßen Anzeigen bei gleichzeitig hoher Voltage Holding Ratio aus.

Anzeigen, die den ECB-Effekt verwenden haben sich als sogenannte VAN- (Vertically Aligned Nematic) Anzeigen in den Bauformen MVA (Multi-Domain Vertical Alignment, z.B.: Yoshide, H. et al., Vortrag 3.1: "MVA LCD for Notebook or Mobile PCs ...", SID 2004 International Symposium, Digest of Technical Papers, XXXV, Buch I, S. 6 bis 9 und Liu, C.T. et al., Vortrag 15.1: "A 46-inch TFT-LCD HDTV Technnology ...", SID 2004 International Symposium, Digest of Technical Papers, XXXV, Buch II, S. 750 bis 753) und PVA (Patterned Vertical Alignment, z.B.: Kim, Sang Soo, Vortrag 15.4: "Super PVA Sets New State-of-the-Art for LCD-TV", SID 2004 International Symposium, Digest of Technical Papers, XXXV, Buch II, S. 760 bis 763) neben ASV- (Avanced Super View, z.B.: Shigeta, Mitzuhiro und Fukuoka, Hirofumi, Vortrag 15.2: "Development of High Quality LCDTV", SID 2004 International Symposium, Digest of Technical Papers, XXXV, Buch II, S. 754 bis 757) Anzeigen und IPS- (In Plane Switching) Anzeigen (z.B.: Yeo, S.D., Vortrag 15.3: "A LC Display for the TV Application", SID 2004 International Symposium, Digest of Technical Papers, XXXV, Buch II, S. 758 & 759), neben den lange bekannten neben TN- (Twisted Nematic) Anzeigen, als eine der drei zur Zeit wichtigsten neueren Typen von Flüssigkristallanzeigen insbesondere für Fernsehanwendungen etabliert. In allgemeiner Form werden die Technologien z.B. in Souk, Jun, SIDSeminar 2004, Seminar M-6: "Recent Advances in LCD Technology", Seminar Lecture Notes, M-6/1 bis M-6/26 und Miller, Ian, SIDSeminar 2004, Seminar M-7: "LCD-Television", Seminar Lecture Notes, M-7/1 bis M-7/32, verglichen. Obwohl die Schaltzeiten moderner ECB-Anzeigen durch Ansteuerungsmethoden mit Übersteuerung (overdrive) bereits deutlich verbessert wurden, z.B.: Kim, Hyeon Kyeong et al., Vortrag 9.1: "A 57-in. Wide UXGA TFT-LCD for HDTV Application", SID 2004 International Symposium, Digest of Technical Papers, XXXV, Buch I, S. 106 bis 109, ist die Erzielung von videotauglichen Schaltzeiten insbesondere beim Schalten von Graustufen immer noch ein noch nicht zufriedenstellend gelöstes Problem.

ECB-Anzeigen verwenden wie ASV-Anzeigen flüssigkristalline Medien mit negativer dielektrischer Anisotropie ($\Delta\varepsilon$), wohingegen TN- und bislang alle gebräuchlichen IPS-Anzeigen flüssigkristalline Medien mit positiver dielektrischer Anisotropie verwenden.

In derartigen Flüssigkristallanzeigen werden die Flüssigkristalle als Dielektrika verwendet, deren optische Eigenschaften sich bei Anlegen einer elektrischen Spannung reversibel ändern.

Da bei Anzeigen im allgemeinen, also auch bei Anzeigen nach diesen erwähnten Effekten, die Betriebsspannung möglichst gering sein soll, werden Flüssigkristallmedien eingesetzt, die in der Regel überwiegend aus Flüssigkristallverbindungen zusammengesetzt sind, die alle das gleiche Vorzeichen der dielektrischen Anisotropie aufweisen und einen möglichst großen Betrag der dielektrischen Anisotropie haben. Es werden in der Regel allenfalls geringere Anteile an neutralen Verbindungen und möglichst keine Verbindungen dem Medium entgegengesetzten Vorzeichen der dielektrischen Anisotropie eingesetzt. Bei den Flüssigkristallmedien mit negativer dielektrischer Anisotropie für ECB-Anzeigen werden somit überwiegend Verbindungen mit negativer dielektrischer Anisotropie eingesetzt. Die eingesetzten Flüssigkristallmedien bestehen in der Regel überwiegend und meist sogar weitestgehend aus Flüssigkristallverbindungen mit negativer dielektrischer Anisotropie.

Bei den gemäß der vorliegenden Anmeldung verwendeten Medien werden typischerweise allenfalls nennenswerte Mengen an dielektrisch neutralen Flüssigkristallverbindungen und in der Regel nur sehr geringe Mengen an oder gar keine dielektrisch positiven Verbindungen eingesetzt, da generell die Flüssigkristallanzeigen möglichst niedrige Ansteuerspannungen haben sollen.

EP 1 362 839 A2 beschreibt dielektrisch positive Flüssigkristallmischungen. JP 2003-165 977 (A) schlägt die Verwendung von Verbindungen mit einer 4-Alkyliden-(z. B. Methyliden-)cyclohexylengruppe in Flüssigkristallmischungen Mischungen mit negativer dielektrischer Anisotropie vor, wohingegen EP 1 245 660 A2 auf die Verwendung von Verbindungen mit einer 2,3-Bis-trifuormethyl-1,4-phenylengruppe in Flüssigkristallmischungen mit negativer dielektrischer Anisotropie gerichtet ist.

WO 2004/076438 offenbart ebenfalls dielektrisch negative Flüssigkristallmischungen.

Die Flüssigkristallmedien des Standes der Technik mit entsprechend niedrigen Ansteuerspannungen haben relativ geringe elektrische Widerstände bzw. eine geringe Voltage Holding Ratio und führen in den Anzeigen zu unerwünscht hohen Stromaufnahmen.

Außerdem ist die Ansteuerspannung der Anzeigen des Standes der Technik oft zu groß, insbesondere für Anzeigen die nicht direkt oder nicht durchgehend ans Stromversorgungsnetz angeschlossen werden wie z.B: Anzeigen für mobile Anwendungen.

Außerdem muß der Phasenbereich ausreichend breit für die beabsichtigte Anwendung sein.

Insbesondere müssen die Schaltzeiten der Flüssigkristallmedien in den Anzeigen verbessert, also verringert,

werden. Dies ist besonders für Anzeigen für Fernseh- oder Multi-Media Anwendungen wichtig. Zur Verbesserung der Schaltzeiten ist in der Vergangenheit wiederholt vorgeschlagen worden, die Rotationsviskosität der Flüssigkristallmedien ($\gamma 1$) zu optimieren, also Medien mit einer möglichst geringen Rotationsviskosität zu realisieren. Die dabei erzielten Ergebnisse sind jedoch nicht ausreichend für viele Anwendungen und lassen es daher wünschenswert erscheinen, weitere Optimierungsansätze aufzufinden.

Somit besteht ein großer Bedarf an Flüssigkristallmedien, die die Nachteile der Medien aus dem Stand der Technik nicht, oder zumindest in deutlich vermindertem Umfang, aufweisen.

Überraschend wurde gefunden, dass Flüssigkristallanzeigen realisiert werden konnten, die eine geringe Schaltzeit in ECB-Anzeigen aufweisen und gleichzeitig eine ausreichend breite nematische Phase, eine günstige Doppelbrechung ($\Delta n$) und eine hohe Voltage Holding Ratio aufweisen.

Gemäß der vorliegenden Erfindung wird die geringe Schaltzeit der Anzeigen dadurch realisiert, dass erfindungsgemäße Flüssigkristallmedien verwendet werden, die einen geringen Wert von 0,25 ms oder weniger für die gemäß dem im folgenden erläuterten Verfahren berechneten Peak-Zeiten ($t_{max}$) aufweisen.

Bevorzugt beträgt der Quotient aus der Peak-Zeit und dem Quadrat der Doppelbrechung der Flüssigkristallmischung ($t_{max}/\Delta n^2$) der erfindungsgemäßen Flüssigkristallmedien 22 ms oder weniger. Dieser Quotient ($t_{max}/\Delta n^2$), der den Einfluß der optimalen Schichtdicke der Flüssigkristallanzeigen berücksichtigt, ist proportional zur Schaltzeit der Flüssigkristallmischungen in den entsprechenden Anzeigen.

Für die Zwecke der vorliegenden Erfindung ist die Peak-Zeit ($t_{max}$) die Zeit, die vergeht, bis der nach dem Anlegen eines kurzen, hohen Spannungspulses an eine mit Flüssigkristall gefüllte Zelle durch die Zelle fließende Strom in seinem zeitlichen Verlauf (I(t)) ein Maximum durchläuft. Sie wird gemäß der vorliegenden Erfindung wie folgt bestimmt. Zunächst wird der zeitliche Verlauf des Stroms (I(t)) bzw. der Stromdichte (I(t)/S) nach den folgenden Gleichungen (1) und (2) berechnet, wobei Gleichung (1) den Strom in Abhängigkeit vom Tiltwinkel des Flüssigkristalldirektors und Gleichung (2) den Zusammenhang zwischen dem Tiltwinkel und der nach Anlegen der Spannung vergangenen Zeit beschreibt.

$$I(\theta_b) = \frac{S(2\alpha_1 \sin^2\theta_b \cos^2\theta_b - \gamma_2 \cos 2\theta_b + \gamma_3)(\varepsilon_0 \Delta\varepsilon \sin 2\theta_b)^2 E_b^3}{(\alpha_1\gamma_1 + \gamma_2^2)\sin^2 2\theta_b - \gamma_1^2 - \gamma_2^2 + 2\gamma_1\gamma_3}$$

Gleichung (1)

$$t(\theta_b) = \frac{\beta_2}{2\varepsilon_0 \Delta\varepsilon E_b^2 \beta_3}\left\{-\ln\left(\frac{\tan\theta_b}{\tan\theta_0}\right) + \frac{-\beta_5 + \gamma_2\sqrt{\beta_1}}{2\beta_4\sqrt{\beta_1}}\ln\left(\frac{\beta_4\tan^2\theta_b + \beta_7 + \sqrt{\beta_1}}{\beta_4\tan^2\theta_0 + \beta_7 + \sqrt{\beta_1}}\right) + \frac{\beta_5 + \gamma_2\sqrt{\beta_1}}{2\beta_4\sqrt{\beta_1}}\ln\left(\frac{\beta_4\tan^2\theta_b + \beta_7 - \sqrt{\beta_1}}{\beta_4\tan^2\theta_0 + \beta_7 - \sqrt{\beta_1}}\right)\right\}$$
$$+ \frac{\beta_6}{2\varepsilon_0 \Delta\varepsilon E_b^2 \sqrt{\beta_1}}\ln\left[\frac{(\alpha_1\cos 2\theta_b + \gamma_2 + \sqrt{\beta_1})(\alpha_1\cos 2\theta_0 + \gamma_2 - \sqrt{\beta_1})}{(\alpha_1\cos 2\theta_b + \gamma_2 - \sqrt{\beta_1})(\alpha_1\cos 2\theta_0 + \gamma_2 + \sqrt{\beta_1})}\right]$$

Gleichung (2)

mit:

S = Elektrodenfläche (diese ist für die Bestimmung des Maximums von I(t) nicht erforderlich),

$E_b$ = U/I (für die Berechnungen wird für die vorliegende Erfindung U = 90V und I = 22 $\mu$m angenommen),

$\theta_0$ = Bulk-Tiltwinkel zum Zeitpunkt t=0

$\theta_b$ = Bulk-Tiltwinkel

$\alpha_1$ bis $\alpha_5$ = Leslie Viskositätskoeffizienten,

$$\beta_1 = \alpha_1^2 + \gamma_2^2 + 2\alpha_1\gamma_3,$$

$$\beta_2 = \gamma_1^2 + \gamma_2^2 - 2\gamma_1\gamma_3,$$

$$\beta_3 = \gamma_2 - \gamma_3$$

$$\beta_4 = \gamma_2 + \gamma_3,$$

$$\beta_5 = \gamma_2^2 + \alpha_1\gamma_3,$$

$$\beta_6 = \alpha_1\gamma_1 + \gamma_2^2,$$

$$\beta_7 = \alpha_1 + \gamma_3$$

$$\gamma_1 =.-\alpha_2;$$

(Rotationsviskosität),

$$\gamma_2 = \alpha_3 - \alpha_2 \text{ und}$$

$$\gamma_3 = \alpha_3 + \alpha_4 + \alpha_5 .$$

Für die Leslie Viskositätskoeffizienten werden für die vorliegende Erfindung die folgenden Annahmen verwendet:

$$\alpha_1 = -10 \text{ mPas}$$

und

$$\alpha_3 = 0 \text{ mPas.}$$

Außerdem gilt für $\alpha_3$ =0 nach Parodi:

$$\alpha_4 + \alpha_5 = -\alpha_2 + 2\eta_2$$

also

$$\alpha_4 + \alpha_5 = \gamma_1 + 2\eta_2 .$$

Hier wird zusätzlich angenommen:

$$\eta_2 \approx \rho * \nu$$

mit:

$$\rho = \text{Dichte (ca. 1 g/cm}^3\text{)}$$

und

$$\nu = \text{Fließviskosität.}$$

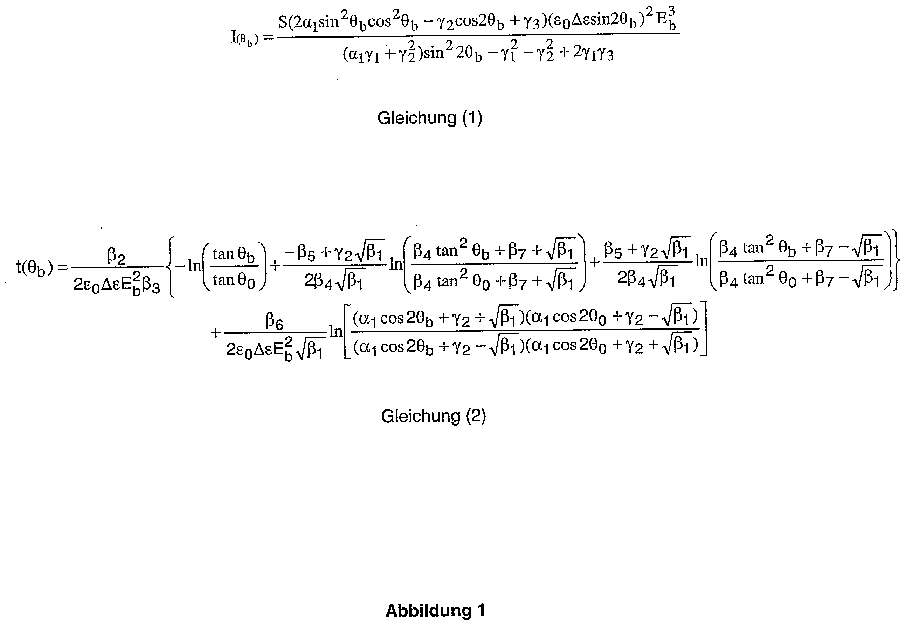

Zur besseren Lesbarkeit sind die beiden Gleichungen (1) und (2) in der Abbildung 1 noch einmal angegeben.

Die Bestimmung der Lage des Maximums $t_{max}$ der Funktion I(t) bzw. $I(\theta_b(t))$ ist auf verschiedene Arten möglich. So kann beispielsweise die Funktion I(t) numerisch berechnet und der Wert und die Lage des Maximums numerisch ausgesucht oder graphisch ermittelt werden. Für die Zwecke der vorliegenden Erfindung werden numerische Verfahren bevorzugt und insbesondere bevorzugt wird eine entsprechende Mathematik-Software Mathematica (z.B: Version 3) der Firma Wolfram Research, Inc., verwendet, in die eine implizite Darstellung von I(t) eingegeben und das Maximum von I(t) numerisch über die Ableitung der Funktion nach der Zeit (dI/dt) ermittelt wird.

Die erfindungsgemäßen Flüssigkristallmedien haben einen Wert der Peak-Zeit ($t_{max}$) von 0,25 ms oder weniger, besonders bevorzugt von 0,20 ms oder weniger, noch mehr bevorzugt von 0,16 ms oder weniger, ganz besonders bevorzugt von 0,13 ms oder weniger und insbesondere bevorzugt von 0,12 ms oder weniger.

Bei einem $\Delta n$ von 0,080±0,010 beträgt der Wert $t_{max}$ der erfindungsgemäßen Flüssigkristallmedien bevorzugt 0,18 ms oder weniger, besonders bevorzugt 0,16 ms oder weniger, noch mehr bevorzugt 0,14 ms oder weniger, ganz besonders bevorzugt 0,12 ms oder weniger und insbesondere bevorzugt 0,10 ms oder weniger.

Bei einem $\Delta$n von 0,100±0,010 beträgt der Wert $t_{max}$ der erfindungsgemäßen Flüssigkristallmedien bevorzugt 0,19 ms oder weniger, besonders bevorzugt 0,17 ms oder weniger, noch mehr bevorzugt 0,15 ms oder weniger, ganz besonders bevorzugt 0,13 ms oder weniger und insbesondere bevorzugt 0,12 ms oder weniger.

Da für die jeweiligen Anwendungen der Flüssigkristallmedien in den verschiedenen Anzeigetypen bzw. Bauformen zum Teil verschiedene Werte der optischen Verzögerungen ($d\cdot\Delta n$) benötigt werden und die Schaltzeit bei den meisten elektro-optischen Effekten umgekehrt proportional zum Quadrat der Schichtdicke der Flüssigkristallzellen (d) ist, ist ein weiterer Parameter zur Charakterisierung der entsprechenden Flüssigkristallmedien der Quotient aus der berechneten Peak-Zeit ($t_{max}$) und dem Quadrat der Doppelbrechung ($\Delta$n), also: $t_{max} / \Delta n^2$.

Die erfindungsgemäßen Flüssigkristallmedien haben bevorzugt einen Wert von $t_{max}/\Delta n^2$ von 22 ms oder weniger, besonders bevorzugt von 20 ms oder weniger, noch mehr bevorzugt von 18 ms oder weniger, ganz besonders bevorzugt von 16 ms oder weniger und insbesondere von 15 ms oder weniger.

Bei einer mittleren dielektrischen Konstante ($\varepsilon_{av.}$) von 4,0±0,5 beträgt der Wert $t_{max}/\Delta n^2$ der erfindungsgemäßen Flüssigkristallmedien bevorzugt 18 ms oder weniger, besonders bevorzugt 16 ms oder weniger, noch mehr bevorzugt 14 ms oder weniger, ganz besonders bevorzugt 12 ms oder weniger und insbesondere bevorzugt 10 ms oder weniger.

Bei einem $\varepsilon_{av.}$ von 5,0±0,5 beträgt der Wert $t/\Delta n^2$ der erfindungsgemäßen Flüssigkristallmedien bevorzugt 19 ms oder weniger, besonders bevorzugt 17 ms oder weniger, noch mehr bevorzugt 15 ms oder weniger, ganz besonders bevorzugt 13 ms oder weniger und insbesondere bevorzugt 12 ms oder weniger.

Bei einem $\varepsilon_{av.}$ von 6,0±0,5 beträgt der Wert $t/\Delta n^2$ der erfindungsgemäßen Flüssigkristallmedien bevorzugt 22 ms oder weniger, besonders bevorzugt 20 ms oder weniger, noch mehr bevorzugt 18 ms oder weniger, ganz besonders bevorzugt 16 ms oder weniger und insbesondere bevorzugt 14 ms oder weniger.

Bei einem $\varepsilon_{av.}$ von 7,0±0,5 beträgt der Wert $t/\Delta n^2$ der erfindungsgemäßen Flüssigkristallmedien bevorzugt 24 ms oder weniger, besonders bevorzugt 22 ms oder weniger, noch mehr bevorzugt 20 ms oder weniger, ganz besonders bevorzugt 17 ms oder weniger und insbesondere bevorzugt 14 ms oder weniger.

Bei einem $\varepsilon_{av.}$ von 8,0±0,5 beträgt der Wert $t/\Delta n^2$ der erfindungsgemäßen Flüssigkristallmedien bevorzugt 26 ms oder weniger, besonders bevorzugt 23 ms der weniger, noch mehr bevorzugt 21 ms oder weniger, ganz besonders bevorzugt 19 ms oder weniger und insbesondere bevorzugt 16 ms oder weniger.

Flüssigkristallanzeigen, die die erfindungsgemäßen Flüssigkristallmedien enthalten bzw. verwenden sind ebenfalls Gegenstand der vorliegenden Erfindung. Diese Anzeigen können direkt, mittels einem Zeitmultiplexverfahren oder mittels einer Aktiven Matrix, z.B. von TFTs (Thin Film Transistors), Varistoren oder Dioden, angesteuert werden. Bevorzugt sind Anzeigen mit einer Aktiv Matrix Ansteuerung.

Außerdem ist das entsprechende Verfahren zur Verringerung der Schaltzeit der Anzeigen Gegenstand der vorliegenden Erfindung.

Die vorliegende Erfindung betrifft ein Flüssigkristallmedium mit negativer dielektrischer Anisotropie,
dadurch gekennzeichnet, dass es eine Peak-Zeit ($t_{max}$),. Die mit hilfe der Gleichungen (1) und (2) bestimmt wird, von 0,25 ms oder weniger,

eine dielektrische Anisotropie bei einer Temperatur von 20 °C und bei 1 kHz im Bereich von -3,0 oder weniger bis -4,0 oder mehr und

eine Doppelbrechung bei einer Temperatur von 20 °C und bei 589 nm im Bereich von 0,070 bis 0,110 aufweist und

a) eine oder mehrere Verbindungen der Formel I, ausgewählt aus der Gruppe der Verbindungen der Formeln I-1 bis I-5

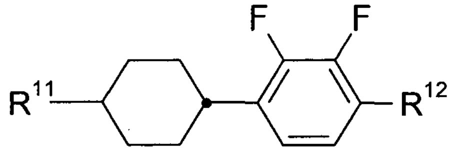

I-1

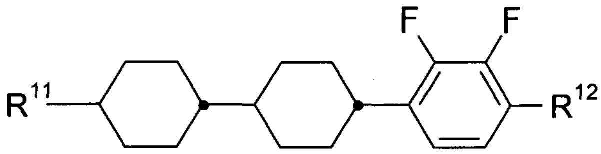

I-2

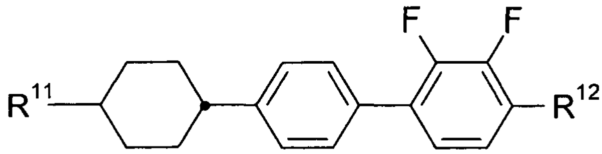

I-3

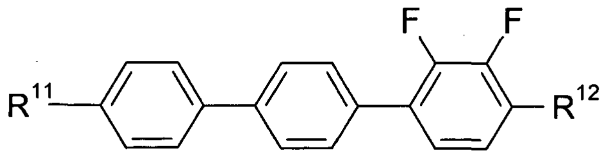

I-4

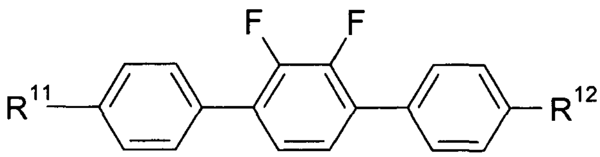

I-5

worin

$R^{11}$ und $R^{12}$ unabhängig voneinander Alkyl mit 1 bis 7 C-Atomen, Alkoxy mit 1 bis 7 C-Atomen oder Alkoxyalkyl, Alkenyl oder Alkenyloxy mit 2 bis 7 C-Atomen, wobei in allen Gruppen eine oder mehrere H-Atome durch Halogenatome ersetzt sein können,

b) eine oder mehrere dielektrisch neutrale Verbindungen der Formel II

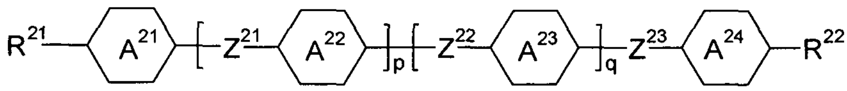

II

worin

$R^{21}$ und $R^{22}$ , unabhängig voneinander, Alkyl mit 1 bis 7 C-Atomen, Alkoxy mit 1 bis 7 C-Atomen, oder Alkoxyalkyl, Alkenyl oder Alkenyloxy mit 2 bis 7 C-Atomen, wobei in allen Gruppen eine oder mehrere H-Atome durch Halogenatome ersetzt sein können,

$Z^{21}$ bis $Z^{23}$ , jeweils unabhängig voneinander, $-CH_2-CH_2-$, -C=C-, -CH=CH-, -CF=CF-, -CF=CH-, -CH=CF-, $-CH_2-CF_2-$, $-CF_2-CH_2-$, $-CF_2-CF_2-$, -CO-O-, -O-CO-, $-OCH_2-$, $-CH_2O-$, $-OCF_2$, $-CF_2O-$ oder eine Einfachbindung,

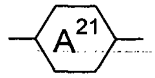 bis 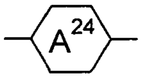 ,

jeweils unabhängig voneinander,

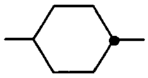 , 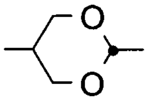 , 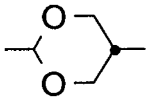 , 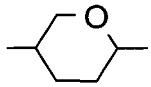 ,

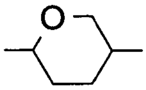 , 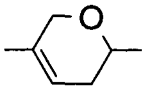 , 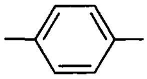 , 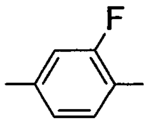 ,

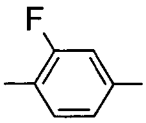 , 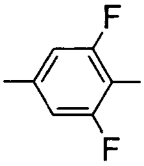 , 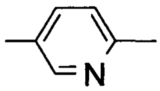 , 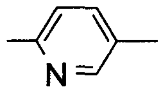 ,

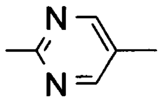 , oder 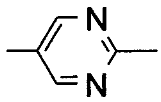 ,

p und q , jeweils unabhängig voneinander, 0 oder 1 bedeuten,

enthält und
die Konzentration der Verbindungen
ausgewählt aus der Gruppe der Verbindungen der Formeln I-1 bis I-5 und II 95 % oder mehr,
ausgewählt aus der Gruppe der Verbindungen der Formeln I-1 bis I-5 60 % oder mehr bis 70 % oder weniger und der Formel I-1 30 % oder mehr bis 40 % oder weniger
beträgt.

Optional enthält das erfindungsgemäße Medium

c) eine chirale Komponente (Komponente C), die eine oder mehrere chirale Verbindungen enthält.

Das erfindungsgemäße Medium enthält eine oder mehrere Verbindungen der Formel I, ausgewählt aus der Gruppe der Verbindungen der Formeln I-1 bis I-5

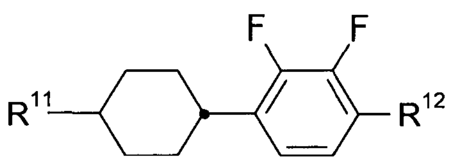 I-1

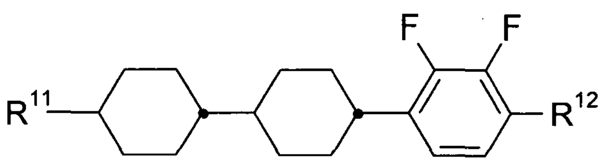 I-2

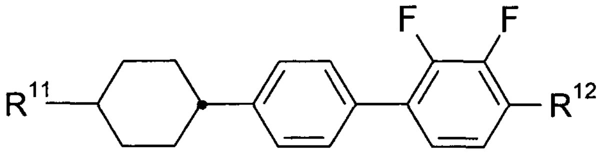

I-3

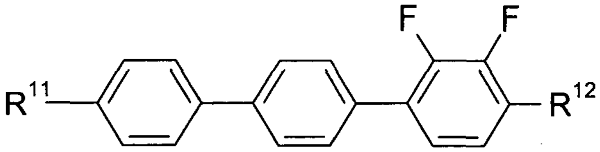

I-4

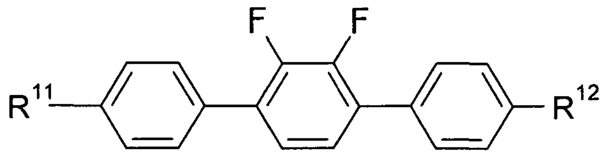

I-5

worin die Parameter bevorzugt $R^{11}$ $C_{1-7}$ Alkyl oder $C_{2-7}$ Alkenyl und

$R^{12}$ $C_{1-7}$ Alkyl, $C_{2-7}$ Alkenyl, $C_{1-7}$ Alkoxy oder $C_{2-7}$ Alkenyloxy bedeuten. In einer weiteren bevorzugten Ausführungsform enthält das Medium eine oder mehrere Verbindungen der Formel I-1, ausgewählt aus der

Gruppe der Verbindungen der Formeln I-1a bis I-1d, bevorzugt der Formeln I-1b und/oder I-1d, besonders bevorzugt der Formel I-1d,

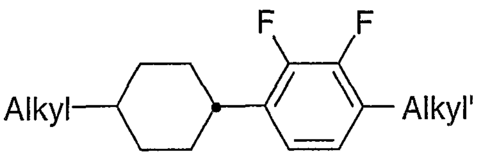

I-1a

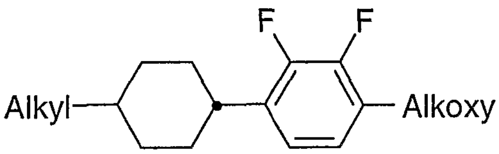

I-1b

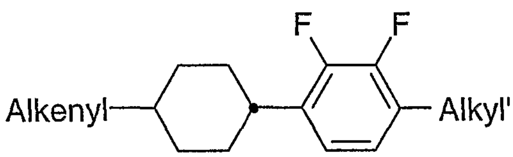

I-1c

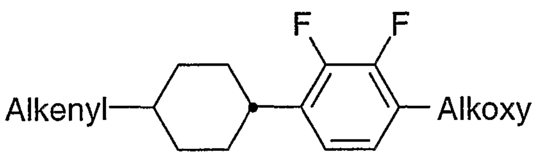

I-1d

worin

| | |
|---|---|
| Alkyl und Alkyl' | , unabhängig voneinander, Alkyl mit 1 bis 7 C-Atomen, bevorzugt mit 2 bis 5 C-Atomen |
| Alkoxy | Alkoxy mit 1 bis 7 C-Atomen, bevorzugt mit 2 bis 4 C-Atomen und |
| Alkenyl | Alkenyl mit 2 bis 7 C-Atomen, bevorzugt mit 2 bis 5 C-Atomen bedeuten. |

In einer weiteren bevorzugten Ausführungsform enthält das Medium eine oder mehrere Verbindungen der Formel I-2, ausgewählt aus der Gruppe der Verbindungen der Formeln I-2a bis I-2d, bevorzugt der Formeln I-2a und/oder

I-2b, besonders bevorzugt der Formel I-2b,

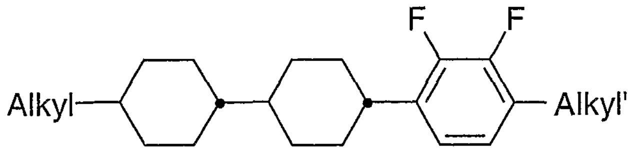

I-2a

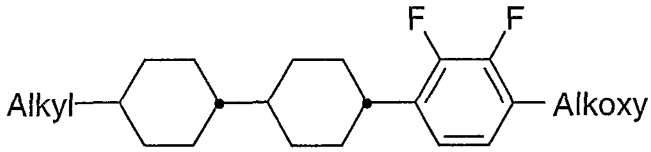

I-2b

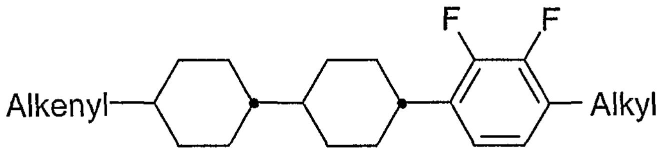

I-2c

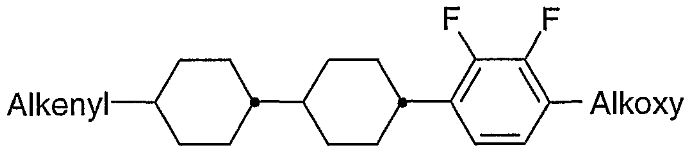

I-2d

worin

Alkyl und Alkyl' , unabhängig voneinander, Alkyl mit 1 bis 7 C-Atomen, bevorzugt mit 2 bis 5 C-Atomen

Alkoxy Alkoxy mit 1 bis 7 C-Atomen, bevorzugt mit 2 bis 4 C-Atomen und

Alkenyl Alkenyl mit 2 bis 7 C-Atomen, bevorzugt mit 2 bis 5 C-Atomen bedeuten.

In einer weiteren bevorzugten Ausführungsform enthält das Medium eine oder mehrere Verbindungen der Formel I-3, ausgewählt aus der Gruppe der Verbindungen der Formeln I-3a bis I-3d, bevorzugt der Formeln I-3b und/oder I-3d,

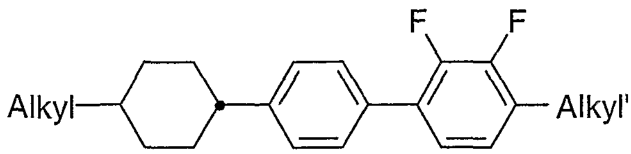

I-3a

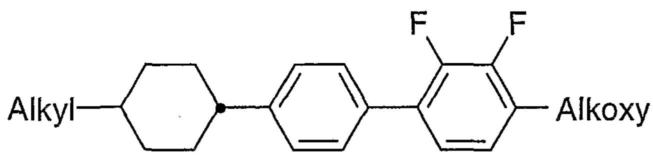

I-3b

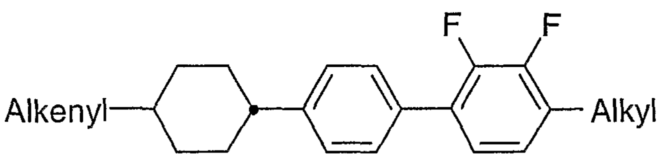

I-3c

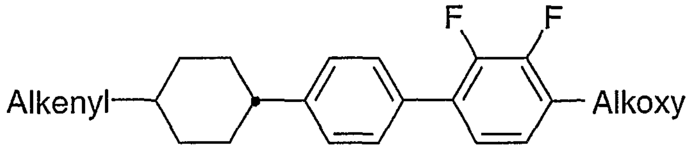

I-3d

worin

Alkyl und Alkyl' , unabhängig voneinander, Alkyl mit 1 bis 7 C-Atomen, bevorzugt mit 2 bis 5 C-Atomen

Alkoxy Alkoxy mit 1 bis 7 C-Atomen, bevorzugt mit 2 bis 4 C-Atomen und

Alkenyl Alkenyl mit 2 bis 7 C-Atomen, bevorzugt mit 2 bis 5 C-Atomen bedeuten.

In einer weiteren bevorzugten Ausführungsform enthält das Medium eine oder mehrere Verbindungen der Formel I-4, ausgewählt aus der Gruppe der Verbindungen der Formeln I-4a bis I-4d, bevorzugt der Formeln I-4a und/oder I-4c, besonders bevorzugt der Formel I-4a,

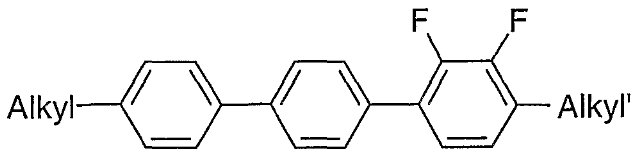

I-4a

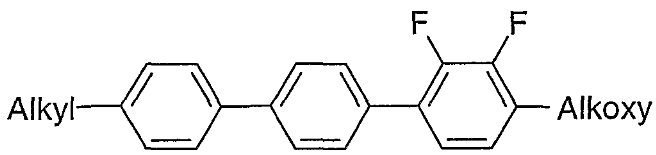

I-4b

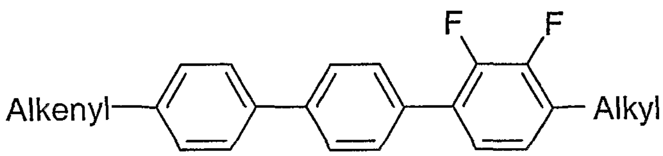

I-4c

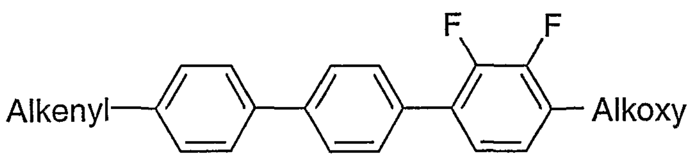

I-4d

worin

Alkyl und Alkyl' , unabhängig voneinander, Alkyl mit 1 bis 7 C-Atomen, bevorzugt mit 2 bis 5 C-Atomen

Alkoxy Alkoxy mit bis 1 bis 7 C-Atomen, bevorzugt mit 2 bis 4 C-Atomen und

Alkenyl Alkenyl mit 2 bis 7 C-Atomen, bevorzugt mit 2 bis 5 C-Atomen bedeuten.

In einer weiteren bevorzugten Ausführungsform enthält das Medium eine oder mehrere Verbindungen der Formel I-5, ausgewählt aus der Gruppe der Verbindungen der Formeln I-5a bis I-5d, bevorzugt der Formeln I-5a und/oder I-5c, besonders bevorzugt der Formel I-5a,

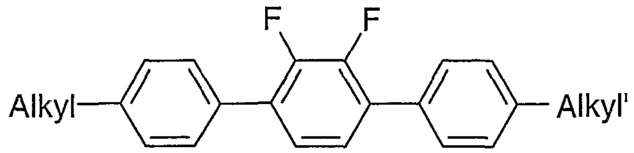

I-5a

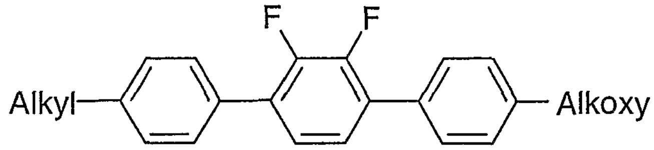

I-5b

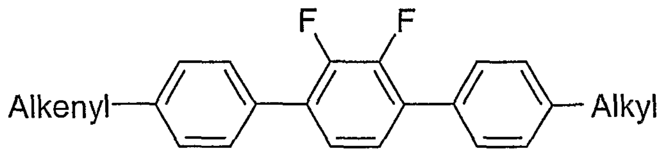

I-5c

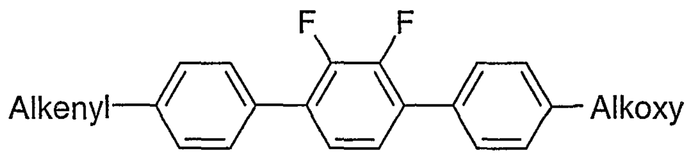

I-5d

worin

| | |
|---|---|
| Alkyl uns Alkyl' | , unabhängig voneinander, Alkyl mit 1 bis 7 C-Atomen, bevorzugt mit 2 bis 5 C-Atomen |
| Alkoxy | Alkoxy mit bis 1 bis 5 C-Atomen, bevorzugt mit 2 bis 4 C-Atomen und |
| Alkenyl | Alkenyl mit 2 bis 7 C-Atomen, bevorzugt mit 2 bis 5 C-Atomen bedeuten. |

In einer weiteren bevorzugten Ausführungsform enthält das Medium eine oder mehrere Verbindungen der Formel II aus der Gruppe der Verbindungen der Formeln II-1 bis II-8, bevorzugt ausgewählt aus der Gruppe der Verbindungen der Formeln II-1 bis II-6, bevorzugt aus der Gruppe II-1 bis II-4 und besonders bevorzugt aus der Gruppe II-2 und II-3,

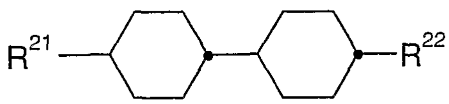

II-1

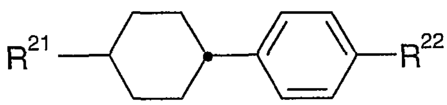

II-2

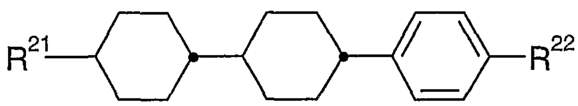

II-3

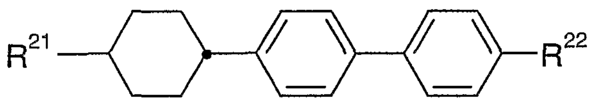

II-4

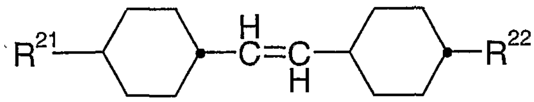

II-5

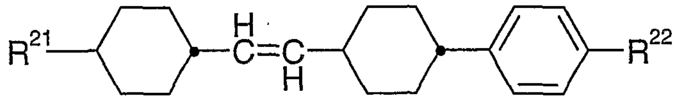

II-6

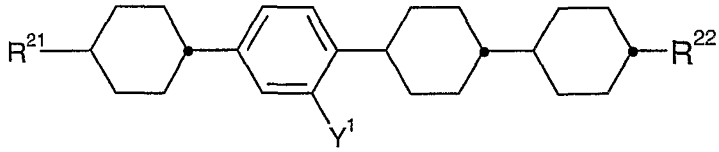

II-7

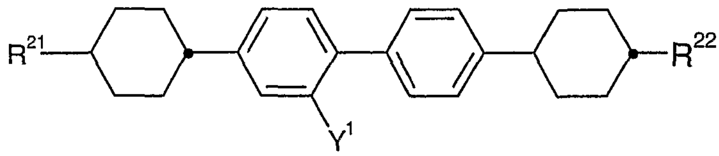

II-8

worin die Parameter die jeweilige oben bei Formel II angegebene Bedeutung haben und

$Y^1$ H oder F bedeutet und

bevorzugt

$R^{21}$ Alkyl oder Alkenyl und

$R^{22}$ Alkyl, Alkenyl oder Alkoxy, bevorzugt Alkyl oder Alkenyl, besonders bevorzugt Alkenyl,

bedeuten.

In einer weiteren bevorzugten Ausführungsform enthält das Medium eine oder mehrere Verbindungen der Formel II-1, ausgewählt aus der Gruppe der Verbindungen der Formeln II-1a bis II-1e, bevorzugt der Formeln II-1a und/oder Formeln II-1c und/oder II-1d, besonders bevorzugt der Formeln II-1c und/oder II-1d und ganz besonders bevorzugt der Formel II-1c und der Formel II-1d,

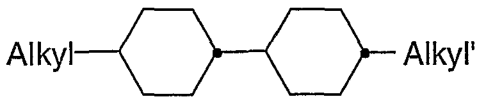

II-1a

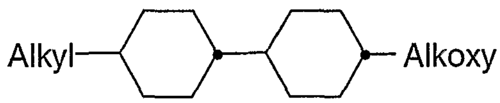

II-1b

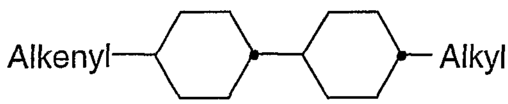

II-1c

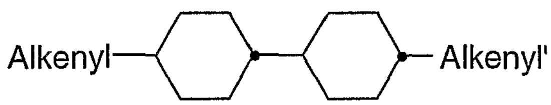

II-1d

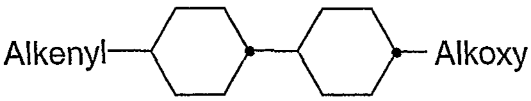

II-1e

worin

Alkyl und Alkyl', unabhängig voneinander, Alkyl mit 1 bis 7 C-Atomen, bevorzugt mit 2 bis 5 C-Atomen

Alkoxy Alkoxy mit 1 bis 5 C-Atomen, bevorzugt mit 2 bis 4 C-Atomen und

Alkenyl und Alkenyl', unabhängig voneinander, Alkenyl mit 2 bis 7 C-Atomen, bevorzugt mit 2 bis 5 C-Atomen bedeuten.

In einer weiteren bevorzugten Ausführungsform enthält das Medium eine oder mehrere Verbindungen der Formel II-2, ausgewählt aus der Gruppe der Verbindungen der Formeln II-2a bis II-2d, bevorzugt der Formeln II-2a und/oder II-2b, besonders bevorzugt der Formel II-2b,

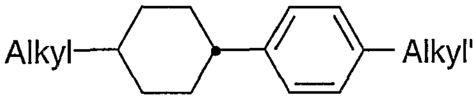

II-2a

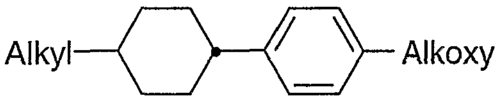

II-2b

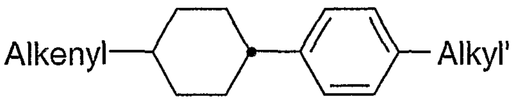

II-2c

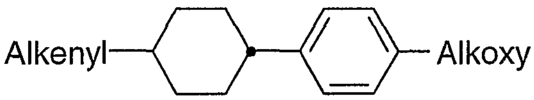

II-2d

worin

Alkyl und Alkyl', unabhängig voneinander, Alkyl mit 1 bis 7 C-Atomen, bevorzugt mit 2 bis 5 C-Atomen

Alkoxy Alkoxy mit 1 bis 5 C-Atomen, bevorzugt mit 2 bis 4 C-Atomen und

Alkenyl Alkenyl mit 2 bis 7 C-Atomen, bevorzugt mit 2 bis 5 C-Atomen bedeuten.

In einer weiteren bevorzugten Ausführungsform enthält das Medium eine oder mehrere Verbindungen der Formel II-3, ausgewählt aus der Gruppe der Verbindungen der Formeln II-3a bis II-3d, bevorzugt der Formeln II-3a und/oder II-3d, besonders bevorzugt der Formel II-3d,

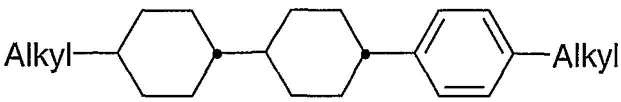

II-3a

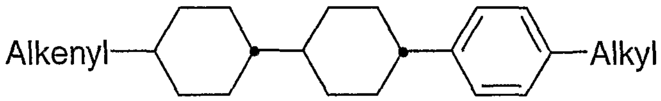

II-3b

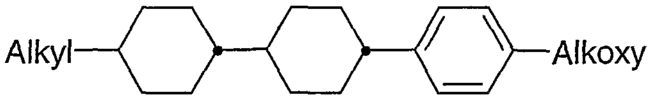

II-3c

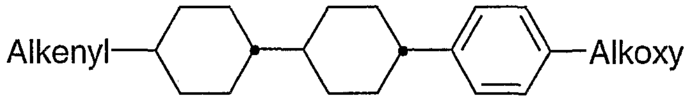

II-3d

worin

| | |
|---|---|
| Alkyl und Alkyl', | unabhängig voneinander, Alkyl mit 1 bis7 C-Atomen, bevorzugt mit 2 bis 5 C-Atomen |
| Alkoxy | Alkoxy mit bis 1 bis 5 C-Atomen, bevorzugt mit 2 bis 4 C-Atomen und |
| Alkenyl | Alkenyl mit 2 bis 7 C-Atomen, bevorzugt mit 2 bis 5 C-Atomen bedeuten. |

In einer weiteren bevorzugten Ausführungsform enthält das Medium eine oder mehrere Verbindungen der Formel II-4 ausgewählt aus der Gruppe der Verbindungen der Formeln II-4a bis II-4d, bevorzugt der Formeln II-4a und/oder II-4d, besonders bevorzugt der Formel II-4d,

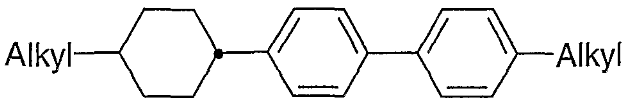

II-4a

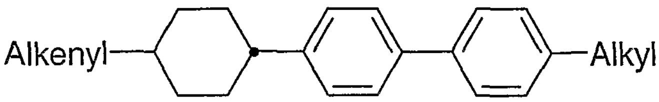

II-4b

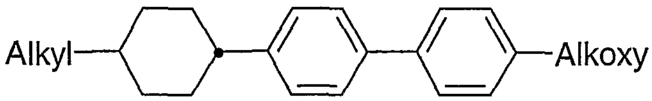

II-4c

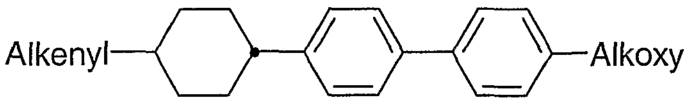

II-4d

worin

| | |
|---|---|
| Alkyl und Alkyl', | unabhängig voneinander, Alkyl mit 1 bis 7 C-Atomen, bevorzugt mit 2 bis 5 C-Atomen |
| Alkoxy | Alkoxy mit bis 1 bis 5 C-Atomen, bevorzugt mit 2 bis 4 C-Atomen und |
| Alkenyl | Alkenyl mit 2 bis 7 C-Atomen, bevorzugt mit 2 bis 5 C-Atomen bedeuten. |

Besonders bevorzugt enthält das Medium eine oder mehrere Verbindung(en) der Formel II-1, ausgewählt aus der Gruppe

- der Formeln II-1c, insbesondere bevorzugt
- der Formel II-1 in der $R^{21}$ Vinyl oder 1-Propenyl und $R^{22}$ Alkyl, bevorzugt n-Alkyl, besonders bevorzugt $R^{21}$ Vinyl und $R^{22}$ Propyl bedeuten und
- der Formeln II-1d, insbesondere bevorzugt
- der Formel II-1 in der $R^{21}$ und $R^{22}$, unabhängig voneinander, Vinyl oder 1-Propenyl, bevorzugt und $R^{21}$ Vinyl und besonders bevorzugt $R^{21}$ und $R^{22}$ Vinyl bedeuten.

In einer bevorzugten Ausführungsform enthält das Medium eine oder mehrere Verbindungen der Formel II-3, insbesondere bevorzugt eine oder mehrere Verbindung(en), in denen $R^{21}$ Vinyl oder 1-Propenyl und $R^{22}$ Alkyl, bevorzugt n-Alkyl, besonders bevorzugt $R^{21}$ Vinyl und $R^{22}$ Methyl bedeuten.

In einer bevorzugten Ausführungsform enthält das Medium eine oder mehrere Verbindungen der Formel II-5, insbesondere bevorzugt eine oder mehrere Verbindung(en), in denen $R^{21}$ Alkyl, Vinyl oder 1-Propenyl und $R^{22}$ Alkyl, bevorzugt n-Alkyl bedeuten.

Für die vorliegende Erfindung bedeutet im Zusammenhang mit der Angabe der Bestandteile der Zusammensetzungen:

- enthalten: die Konzentration der betreffenden Bestandteile in der Zusammensetzung beträgt bevorzugt 10% oder mehr, besonders bevorzugt 20% oder mehr,
- überwiegend bestehen aus: die Konzentration der betreffenden Bestandteile in der Zusammensetzung beträgt bevorzugt 50% oder mehr, besonders bevorzugt 55% oder mehr und ganz besonders bevorzugt 60% oder mehr,
- im wesentlichen vollständig bestehen aus: die Konzentration der betreffenden Bestandteile in der Zusammensetzung beträgt bevorzugt 80% oder mehr, besonders bevorzugt 90% oder mehr und ganz besonders bevorzugt 95% oder mehr und
- nahezu vollständig bestehen aus: die Konzentration der betreffenden Bestandteile in der Zusammensetzung beträgt bevorzugt 98% oder mehr, besonders bevorzugt 99% oder mehr und ganz besonders bevorzugt 100,0%.

Dies gilt sowohl für die Medien als Zusammensetzungen mit ihren Bestandteilen, die Komponenten und Verbindungen sein können, als auch für die Komponenten mit ihren Bestandteilen, den Verbindungen.

Bevorzugt besteht die Komponente A überwiegend, besonders bevorzugt im wesentlichen vollständig und ganz besonders bevorzugt nahezu vollständig aus einer oder mehreren Verbindungen der Formel I, bevorzugt ausgewählt aus der Gruppe der Verbindungen der Formeln I-1 bis I-5 und ganz besonders bevorzugt ausgewählt aus der Gruppe der Verbindungen der Formeln I-1a bis I-5d.

Bevorzugt besteht die Komponente B überwiegend, besonders bevorzugt im wesentlichen vollständig und ganz besonders bevorzugt nahezu vollständig aus einer oder mehreren Verbindungen der Formel II, bevorzugt ausgewählt aus der Gruppe der Verbindungen der Formeln II-1 bis II-6, besonders bevorzugt ausgewählt aus der Gruppe der Verbindungen der Formeln II-1 bis II-4 und ganz besonders bevorzugt ausgewählt aus der Gruppe der Verbindungen der Formeln II-1a bis 11-4d.

Die chirale Verbindung oder die chiralen Verbindungen, die in Komponente C der Flüssigkristallmedien gemäß der vorliegenden Erfindung verwendet werden können, werden ausgewählt aus den bekannten chiralen Dotierstoffen. Bevorzugt besteht die Komponente C überwiegend, besonders bevorzugt im wesentlichen vollständig und ganz besonders bevorzugt nahezu vollständig aus einer oder mehreren Verbindungen ausgewählt aus der Gruppe der Verbindungen der folgenden Formeln III bis V

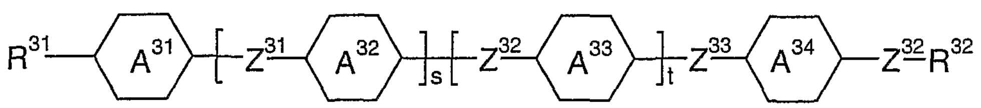

III

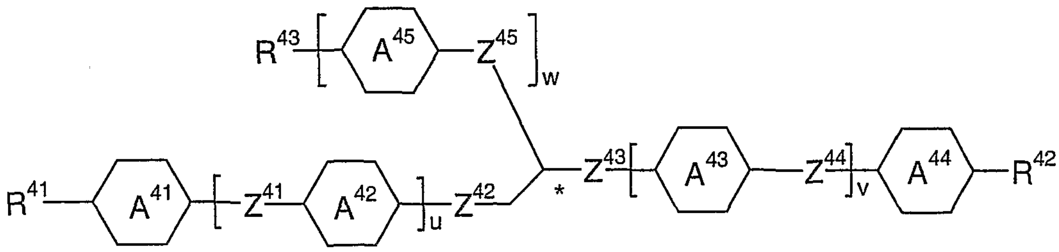

IV

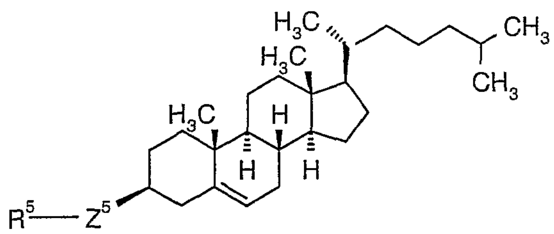

V

worin

| | |
|---|---|
| $R^{31}$ bis $R^{43}$und $R^5$, | jeweils unabhängig voneinander, die oben bei Formel II für $R^{21}$ gegebene Bedeutung besitzen, und alternativ H, CN, F, Cl $CF_3$, $OCF_3$, $CF_2H$ oder $OCF_2H$ und mindestens einer von $R^{31}$ und $R^{32}$ eine chirale Gruppe bedeuten, |
| $Z^{31}$ bis $Z^{53}$ und $Z^5$, | jeweils unabhängig voneinander $-CH_2CH_2-$, -CH=CH-, -COO-, -O-CO- oder eine Einfachbindung, bevorzugt $Z^{31}$, $Z^{32}$, $Z^{41}$, $Z^{44}$ und $Z^{45}$ eine Einfachbindung, $Z^{33}$, $Z^{42}$ und $Z^{43}$ -COO- oder eine Einfachbindung, $Z^{42}$ bevorzugt -COO- und $Z^{43}$ und $Z^5$ -O-CO-, |

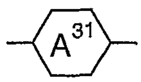 bis 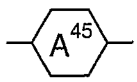 ,

, jeweils unabhängig voneinander,

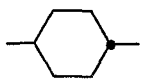 , 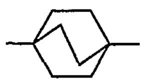 , 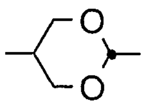 , 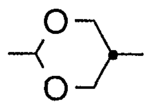 ,

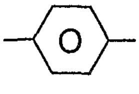 , 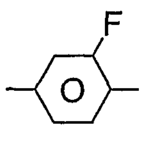 , 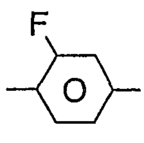 , 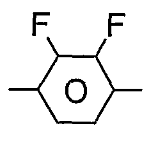 ,

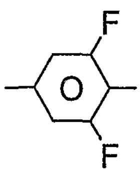 , 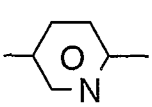 , 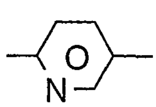 , 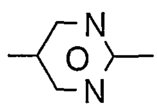 ,

oder 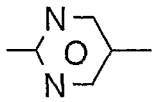

,

s, t, u, v, und w, jeweils unabhängig voneinander, 0 oder 1, bevorzugt s und t beide 0 und u und v beide 1, bedeuten.

Die Verbindungen der Formeln III bis V werden bevorzugt ausgewählt aus der Gruppe der Verbindungen der Formeln III-1 bis III-3, IV-1 und IV-2 bzw. V-1 und V-2,

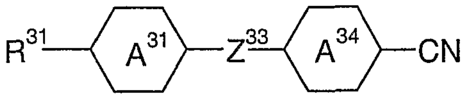

III-1

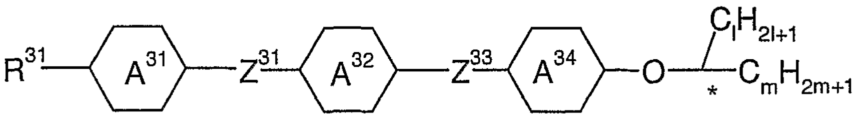

III-2

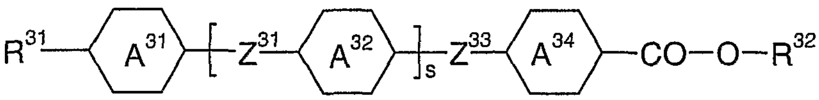

III-3

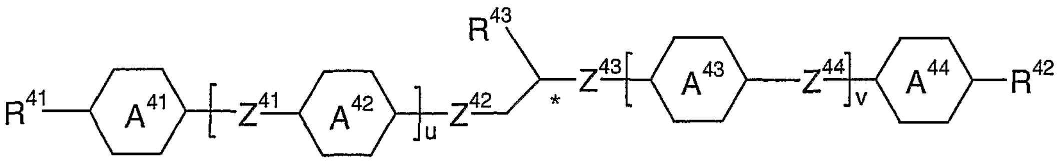

IV-1

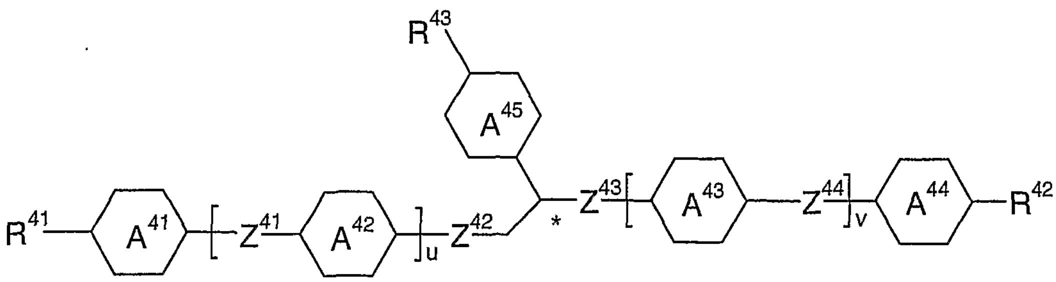

IV-2

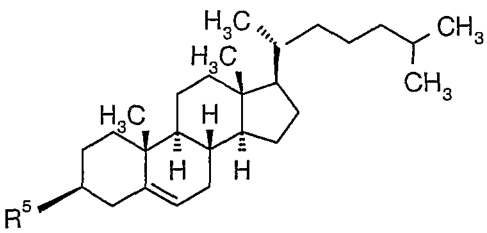

V-1

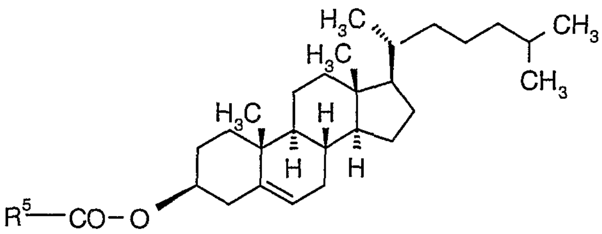

V-2

worin die Parameter jeweils die oben bei den Formeln III bis V gegebene Bedeutung haben und bevorzugt

| | |
|---|---|
| $R^{31}$ bis $R^5$ | Alkyl, Alkenyl oder Alkoxy H, CN, F, Cl, $CF_3$, $OCF_3$, $CF_2H$ oder $OCF_2H$ und mindestens einer von $R^{31}$ und $R^{32}$ eine chirale Gruppe, bevorzugt Isooctyloxy |
| $Z^{31}$ | eine Einfachbindung, |
| $Z^{33}$ | in Formel III-2 eine Einfachbindung und in Formel III-3 -COO-, |
| $Z^{42}$ | -COO-, |
| $Z^{43}$ | -O-CO- |
| m | eine ganze Zahl von 1 bis 8, bevorzugt 6 und |
| l | eine von m verschiedene ganze Zahl von 0 bis 8, bevorzugt 1, bedeuten. Insbesondere bevorzugt werden die Verbindungen ausgewählt aus der Gruppe der Verbindungen der folgenden Formeln III-1a, III-1b, III-2a bis III-2c und III-3a, IV-1a und IV-2a bzw. V-1a und V-2a |

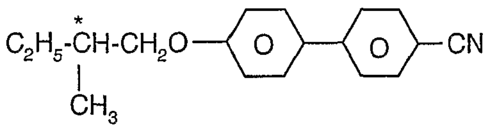

III-1a

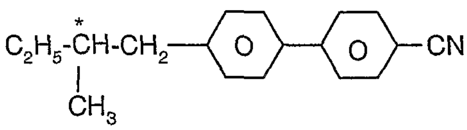

III-1b

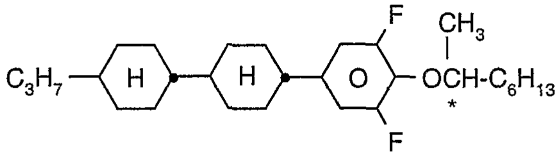

III-2a

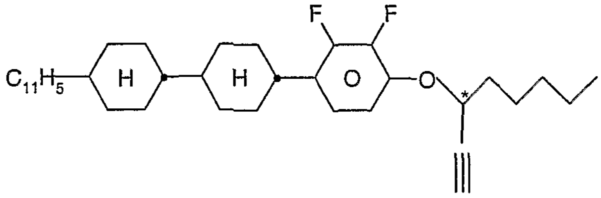

III-2b

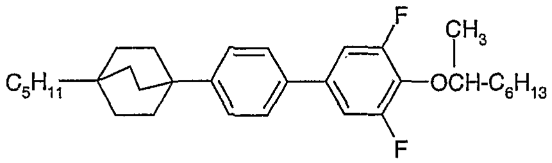

III-2c

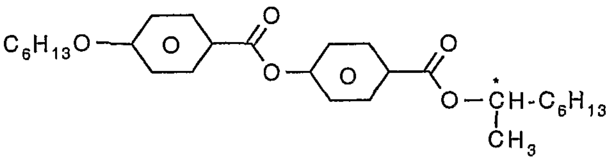

III-3a

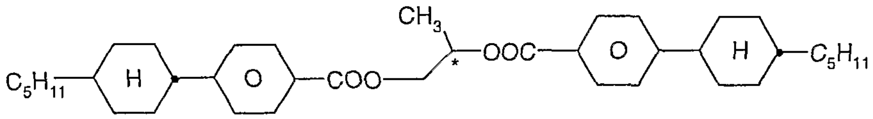

IV-1a

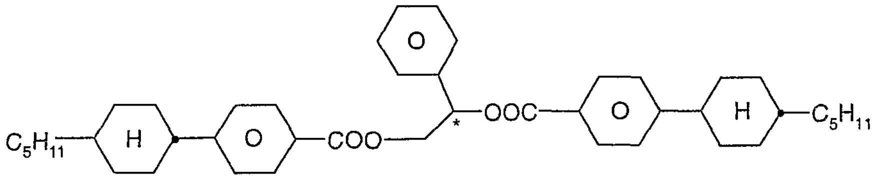

IV-1b

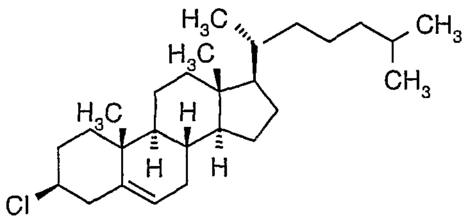

V-1a

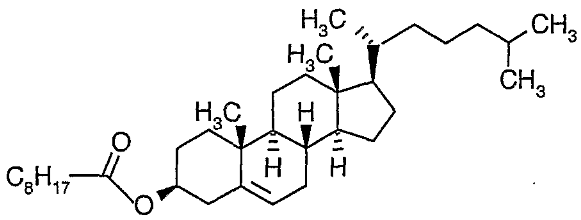

V-2a

In einer bevorzugten Ausführungsform enthalten die erfindungsgemäßen Flüssigkristallmedien insgesamt bezogen auf die Gesamtmischung 0 % oder mehr bis 15 % oder weniger, bevorzugt 0 % oder mehr bis 10 % oder weniger, besonders bevorzugt 0,1 % oder mehr bis 6 % oder weniger und ganz besonders bevorzugt 1 % oder mehr bis 5 % oder weniger an Komponente C, bevorzugt an Verbindungen, ausgewählt aus der Gruppe der Formeln III bis V.

In einer weiteren bevorzugten Ausführungsform enthalten die erfindungsgemäßen Flüssigkristallmedien insgesamt bezogen auf die Gesamtmischung

bevorzugt 32 % oder mehr bis 39 % oder weniger und ganz besonders bevorzugt 33 % oder mehr bis 37 % oder weniger an Verbindungen der Formel I-1,

15 % oder mehr bis 45 % oder weniger, bevorzugt 18 % oder mehr bis 32 % oder weniger, besonders bevorzugt 20 % oder mehr bis 30 % oder weniger und ganz besonders bevorzugt 21 % oder mehr bis 25 % oder weniger an Verbindungen der Formel I-2,

0 % oder mehr bis 30 % oder weniger, bevorzugt 5 % oder mehr bis 25 % oder weniger, besonders bevorzugt 10 % oder mehr bis 20 % oder weniger und ganz besonders bevorzugt 13 % oder mehr bis 18 % oder weniger an Verbindungen der Formel I-3,

0 % oder mehr bis 20 % oder weniger, bevorzugt 0 % oder mehr bis 15 % oder weniger, besonders bevorzugt

0 % oder mehr bis 10 % oder weniger und ganz besonders bevorzugt 0 % oder mehr bis 5 % oder weniger an Verbindungen, ausgewählt aus der Gruppe der Formeln I-4 und I-5, bevorzugt der Formel I-4,

15 % oder mehr bis 45 % oder weniger, bevorzugt 20 % oder mehr bis 40 % oder weniger, besonders bevorzugt 25 % oder mehr bis 37 % oder weniger und ganz besonders bevorzugt 30 % oder mehr bis 35 % oder weniger an Verbindungen, ausgewählt aus der Gruppe der Formeln II-1 und II-5, bevorzugt der Formel II-5,

0 % oder mehr bis 20 % oder weniger, bevorzugt 0 % oder mehr bis 15 % oder weniger, besonders bevorzugt 0 % oder mehr bis 10 % oder weniger und ganz besonders bevorzugt 0 % oder mehr bis 5 % oder weniger an Verbindungen, ausgewählt, aus der Gruppe der Formeln II-2 und II-4, bevorzugt der Formel II-4 und

0 % oder mehr bis 20 % oder weniger, bevorzugt 0 % oder mehr bis 15 % oder weniger, besonders bevorzugt 1 % oder mehr bis 12 % oder weniger und ganz besonders bevorzugt 3 % oder mehr bis 8 % oder weniger an Verbindungen, ausgewählt aus der Gruppe der Formeln II-3 und II-6, bevorzugt der Formel II-6.

In einer bevorzugten Ausführungsform enthält die erfindungsgemäße Flüssigkristallmischung insgesamt 1 % oder mehr bis 5 % oder weniger, bevorzugt 3 % oder mehr bis 5 % oder weniger, an Verbindungen, ausgewählt aus der Gruppe der Formeln III, IV und V.

Hier, wie in der gesamten vorliegenden Offenbarung und den Ansprüchen, bedeutet der Begriff "Verbindungen", auch geschrieben als "Verbindung(en)", sofern nicht explizit anders angegeben, sowohl eine als auch mehrere Verbindungen.

Die einzelnen Verbindungen werden in den Mischungen in Konzentrationen jeweils von 1 % oder mehr bis 30 % oder weniger bevorzugt von 2 % oder mehr bis 30 % oder weniger und besonders bevorzugt von 4 % oder mehr bis 16 % oder weniger eingesetzt.

In einer bevorzugten Ausführungsform enthalten die Flüssigkristallmedien insbesondere bevorzugt jeweils insgesamt

30 % bis 38 % an Verbindungen der Formel I-1,
14 % bis 28 % an Verbindungen der Formel I-2,
3 % bis 17 % an Verbindungen der Formel I-3,
0 % bis 5 % an Verbindungen der Formel I-4,
0 % bis 5 % an Verbindungen der Formel I-5,
28 % bis 42 % an Verbindungen der Formel II-1 und II-4,
0 % bis 5 % an Verbindungen der Formel II-2 und II-5 und
0 % bis 5 % an Verbindungen der Formel II-3 und II-6.

Ganz besonders bevorzugt enthalten die Flüssigkristallmedien in dieser Ausführungsform jeweils insgesamt

31 % bis 36 % an Verbindungen der Formel I-1,
17 % bis 23 % an Verbindungen der Formel I-2,
5 % bis 15 % an Verbindungen der Formel I-3,
0 % bis 3 % an Verbindungen der Formel I-4,
0 % bis 3 % an Verbindungen der Formel I-5,
30 % bis 37 % an Verbindungen der Formel II-1 und II-4,
0 % bis 2 % an Verbindungen der Formel II-2 und II-5 und
0 % bis 3 % an Verbindungen der Formel II-3 und II-6.

In einer besonders bevorzugten Ausführungsform, die mit den oben beschriebenen bevorzugten Ausführungsformen für die bevorzugten Konzentrationsbereiche identisch sein kann und bevorzugt identisch ist, enthalten die Flüssigkristallmedien:

- eine oder mehrere Verbindungen der Formel I, bevorzugt ausgewählt aus der Gruppe der Verbindungen der Formeln I-1 bis I-5, bevorzugt der Formeln I-1 und/oder I-2 und/oder I-3 bevorzugt mit $R^{11}$ n-Alkyl oder Alkenyl, bevorzugt Alkenyl, besonders bevorzugt Vinyl und $R^{12}$ Alkyl oder Alkoxy, bevorzugt Alkoxy, bevorzugt

    - eine oder mehrere Verbindungen der Formel I-1, worin $R^{11}$ bevorzugt n-Propyl oder n-Pentyl und $R^{22}$ bevorzugt Ethoxy bedeutet und/oder

    - eine oder mehrere Verbindungen der Formel I-2, worin $R^{11}$ bevorzugt Ethyl oder n-Butyl, bevorzugt n-Butyl und $R^{22}$ bevorzugt Ethoxy bedeutet und/oder

- eine oder mehrere Verbindungen der Formel II, bevorzugt ausgewählt aus der Gruppe der Verbindungen der Formeln

II-1 bis II-6, bevorzugt der Formeln II-1 und/oder II-3 und/oder I-5 und/oder II-6, bevorzugt mit $R^{21}$ n-Alkyl oder Alkenyl, bevorzugt Alkenyl, besonders bevorzugt Vinyl und $R^{22}$ Alkyl oder Alkoxy, bevorzugt Alkoxy, besonders bevorzugt Methyl oder Propyl, bevorzugt

- eine oder mehrere Verbindungen der Formel II-1, worin $R^{21}$ bevorzugt Alkenyl, besonders bevorzugt Vinyl oder 1-Propenyl, ganz besonders bevorzugt Vinyl und $R^{22}$ bevorzugt Alkyl, bevorzugt n-Alkyl und ganz besonders bevorzugt Propyl bedeuten und/oder

- eine oder mehrere Verbindungen der Formel II-1, worin $R^{21}$ und $R^{22}$ bevorzugt Alkenyl, besonders bevorzugt Vinyl oder 1-Propenyl, ganz besonders bevorzugt $R^{21}$ Vinyl und insbesondere bevorzugt $R^{21}$ und $R^{22}$ beide Vinyl bedeuten und/oder

- eine oder mehrere Verbindungen der Formel II-3, worin $R^{21}$ bevorzugt Alkenyl, bevorzugt Vinyl und $R^{22}$ bevorzugt Alkyl, bevorzugt Methyl bedeuten und/oder

- eine oder mehrere Verbindungen der Formel II-5 und/oder

- eine oder mehrere Verbindungen der Formel II-6 und/oder

• eine oder mehrere Verbindungen, ausgewählt aus der Gruppe der Verbindungen der Formel III und/oder.

• eine oder mehrere Verbindungen, ausgewählt aus der Gruppe der Verbindungen der Formel IV.

Hierbei sind besonders bevorzugt Flüssigkristallmedien, die

- eine oder mehrere Verbindungen der Formel I, bevorzugt ausgewählt aus der Gruppe der Verbindungen der Formeln I-1 bis I-5, bevorzugt mit $R^{11}$ n-Alkyl und $R^{12}$ Alkoxy, und insbesondere jeweils pro Verbindung in Konzentrationen von 6 % oder mehr bis 20 % oder weniger je Verbindung und/oder

- eine oder mehrere Verbindungen der Formel II-1, insbesondere jeweils pro Verbindung in Konzentrationen von 2 % oder mehr, bevorzugt 4 % oder mehr bis 11 % oder weniger je Verbindung und/oder

- eine oder mehrere Verbindungen der Formeln II-3, II-2 und 11-4 insbesondere jeweils pro Verbindung in Konzentrationen von 2 % oder mehr, bevorzugt 4 % oder mehr bis 11 % oder weniger je Verbindung und/oder

- eine oder mehrere Verbindungen der Formeln III bis V, insbesondere jeweils pro Verbindung in Konzentrationen von 0,1 % oder mehr, bevorzugt 0,4 % oder mehr bis 8 % oder weniger je Verbindung

enthalten.

Die erfindungsgemäßen Flüssigkristallmedien weisen bevorzugt eine nematische Phase von jeweils mindestens von -20 °C oder weniger bis 70 °C oder mehr, besonders bevorzugt von -30 °C oder weniger bis 80 °C oder mehr, ganz besonders bevorzugt von -40 °C oder weniger bis 85 °C oder mehr und am allermeisten bevorzugt von -40 °C oder weniger bis 90 °C oder mehr auf.

Hierbei bedeutet der Begriff "eine nematische Phase aufweisen" einerseits, dass bei tiefen Temperaturen bei der entsprechenden Temperatur keine smektische Phase und keine Kristallisation beobachtet wird und andererseits, dass beim Aufheizen aus der nematischen Phase noch keine Klärung auftritt. Die Untersuchung bei tiefen Temperaturen wird in einem Fließviskosimeter bei der entsprechenden Temperatur durchgeführt sowie durch Lagerung in Testzellen einer der elektrooptischen Anwendung entsprechenden Schichtdicke für mindestens 100 Stunden überprüft. Wenn die Lagerstabilität bei einer Temperatur von -20°C in einer entsprechenden Testzelle 1.000 h oder mehr beträgt, wird das Medium als bei dieser Temperatur stabil bezeichnet. Bei Temperaturen von -30°C bzw. -40°C betragen die entsprechenden Zeiten 500 h bzw. 250 h. Bei hohen Temperaturen wird der Klärpunkt nach üblichen Methoden in Kapillaren gemessen.

Ferner sind die erfindungsgemäßen Flüssigkristallmedien durch Werte der optischen Anisotropien im mittleren bis niedrigen Bereich gekennzeichnet. Die Werte der Doppelbrechung liegen bevorzugt im Bereich von 0,070 bis 0,100 und ganz besonders bevorzugt im Bereich von 0,075 bis 0,090.

In einer überlappenden, besonders bevorzugten Ausführungsform der vorliegenden Erfindung liegen Werte der Doppelbrechung bevorzugt im Bereich von 0,070 bis 0,090 und ganz besonders bevorzugt im Bereich von 0,075 bis 0,085.

Die erfindungsgemäßen Flüssigkristallmedien haben eine negative dielektrische Anisotropie und weisen relativ hohe Werte des Betrags der dielektrischen Anisotropie ($|\Delta\varepsilon|$) auf, die bevorzugt im Bereich von 3,5 oder mehr bis 3,9 oder weniger liegen.

Die erfindungsgemäßen Flüssigkristallmedien weisen relativ kleine Werte für die Schwellenspannung ($V_0$) im Bereich von 1,7 V oder mehr bis 2,5 V oder weniger, bevorzugt von 1,8 V oder mehr bis 2,4 V oder weniger, besonders bevorzugt von 1,9 V oder mehr bis 2,3 V oder weniger und ganz besonders bevorzugt von 1,95 V oder mehr bis 2,1 V oder weniger.

Die erfindungsgemäßen Flüssigkristallmedien weisen bevorzugt relativ niedrige Werte der mittleren dielektrischen Anisotropie ($\varepsilon_{av.} \equiv (\varepsilon\| + 2\varepsilon\perp)/3$) auf, die bevorzugt im Bereich von 5,0 oder mehr bis 7,0 oder weniger, bevorzugt von 5,5 oder mehr bis 6,5 oder weniger, noch mehr bevorzugt von 5,7 oder mehr bis 6,4 oder weniger, besonders bevorzugt von 5,8 oder mehr bis 6,2 oder weniger und ganz besonders bevorzugt von 5,9 oder mehr bis 6,1 oder weniger liegen.

Außerdem weisen die erfindungsgemäßen Flüssigkristallmedien hohe Werte für die Voltage Holding Ratio in Flüssigkristallzellen auf.

Diese sind in frisch gefüllten Zellen bei 20°C in den Zellen größer oder gleich 95 %, bevorzugt größer oder gleich 97 %, besonders bevorzugt größer oder gleich 98 % und ganz besonders bevorzugt größer oder gleich 99 % und nach 5 Minuten im Ofen bei 100°C in den Zellen größer oder gleich 90 %, bevorzugt größer oder gleich 93 %, besonders bevorzugt größer oder gleich 96 % und ganz besonders bevorzugt größer oder gleich 98 %.

In der Regel weisen dabei Flüssigkristallmedien mit einer geringen Ansteuerspannung bzw. Schwellenspannung eine geringere Voltage Holding Ratio auf als solche mit einer größeren Ansteuerspannung bzw. Schwellenspannung und umgekehrt.

Diese bevorzugten Werte für die einzelnen physikalischen Eigenschaften werden von den erfindungsgemäßen Medien bevorzugt auch jeweils miteinander kombiniert eingehalten.

Für die vorliegende Erfindung bedeutet "$\leq$" kleiner oder gleich, bevorzugt kleiner und "$\geq$" größer oder gleich, bevorzugt größer.

Für die vorliegende Erfindung bedeuten

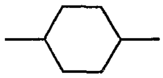 , 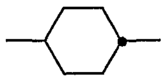 und 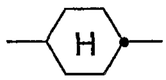

trans-1,4-Cyclohexylen.

Für die vorliegende Erfindung bedeuten die Begriffe "dielektrisch positive Verbindungen" solche Verbindungen mit einem $\Delta\varepsilon > 1{,}5$, "dielektrisch neutrale Verbindungen" solche mit $-1{,}5 \leq \Delta\varepsilon \leq 1{,}5$ und "dielektrisch negative" Verbindungen solche mit $\Delta\varepsilon < -1{,}5$. Hierbei wird die dielektrische Anisotropie der Verbindungen bestimmt, indem 10 % der Verbindungen in einem flüssigkristallinen Host gelöst werden und von der resultierenden Mischung die Kapazität in mindestens jeweils einer Testzelle mit 20 $\mu$m Schichtdicke mit homeotroper und mit homogener Oberflächenorientierung bei 1 kHz bestimmt wird. Die Meßspannung beträgt typischerweise 0,5 V bis 1,0 V, sie ist jedoch stets niedriger als die kapazitive Schwelle der jeweiligen untersuchten Flüssigkristallmischung.

Als Hostmischung für dielektrisch positive und dielektrisch neutrale Verbindungen wird ZLI-4792 und für dielektrisch negative Verbindungen ZLI-2857; beide von Merck KGaA, Deutschland, verwendet. Aus der Änderung der Dielektrizitätskonstante der Hostmischung nach Zugabe der zu untersuchenden Verbindung und Extrapolation auf 100 % der eingesetzten Verbindung werden die Werte für die jeweiligen zu untersuchenden Verbindungen erhalten. Die zu untersuchende Verbindung wird zu 10% in der Hostmischung gelöst. Wenn die Löslichkeit der Substanz hierzu zu gering ist, wird die Konzentration schrittweise solange halbiert, bis die Untersuchung bei der gewünschten Temperatur erfolgen kann.

Alle angegebenen Werte für Temperaturen für die vorliegende Erfindung sind in °C und alle Temperaturdifferenzen entsprechend Differenzgrad angegeben, sofern nicht explizit anders angegeben.

Der Begriff "Schwellenspannung" bezieht sich für die vorliegende Erfindung auf die kapazitive Schwelle ($V_0$), auch Freedericksz-Schwelle genannt, sofern nicht explizit anders angegeben. In den Beispielen wird auch, wie allgemein üblich, die optische Schwelle für 10 % relativen Kontrast ($V_{10}$) bestimmt und angegeben.

Die elektrooptischen Eigenschaften, z.B. die Schwellenspannung ($V_0$) (kapazitive Messung) und die optische Schwelle ($V_{10}$) werden, ebenso wie das Schaltverhalten, in bei der Merck KGaA hergestellten Testzellen bestimmt. Die Messzellen haben Substrate aus Natriumglas (Sodalime Glas) und sind in einer ECB- bzw. VA-Konfiguration mit Polyimidorientierungsschichten (SE-1211 mit Verdünner **26 (Mischungsverhältnis 1:1) beide der Firma Nissan Chemicals, Japan), die senkrecht zueinander gerieben sind, ausgeführt. Die Fläche der durchsichtigen, nahezu quadratischen Elektroden aus ITO beträgt 1 $cm^2$. Die Schichtdicke der verwendeten Testzellen wird entsprechend der Doppelbrechung der untersuchten Flüssigkristallmischung so ausgewählt, dass die optische Verzögerung ($0{,}33 \pm 0{,}01$) $\mu$m beträgt. Die

Polarisatoren, von denen sich jeweils einer vor bzw. hinter der Zelle befindet, bilden mit ihren Absorptionsachsen einen Winkel von 90° zueinander und sind mit diesen Achsen parallel zu der Reiberichtung an ihrem jeweils benachbarten Substrat. Die Schichtdicke beträgt meist ca. 4,0 $\mu$m. Die Zellen werden unter Normaldruck mittels Kapillarität gefüllt und unversiegelt untersucht. Die verwendeten Flüssigkristallmischungen sind, wenn nicht anders angegeben, nicht mit einem chiralen Dotierstoff versetzt, sie eignen sich aber auch besonders für Anwendungen, in denen eine solche Dotierung erforderlich ist.

Die elektrooptischen Eigenschaften und die Schaltzeiten der Testzellen werden in einem Meßgerät DMS 301 der Firma Autronic-Melchers, Karlsruhe, Deutschland, bei einer Temperatur von 20°C bestimmt. Die verwendete Ansteuerwellenform ist eine Rechteckwelle mit einer Frequenz von 60 Hz. Die Spannung wird als $V_{rms}$ (root mean square) angegeben. Bei der Messung der Schaltzeiten wird die Spannung von 0 V zum zweifachen Wert der optischen Schwelle ($2V_{10}$) erhöht und umgekehrt. Die angegebenen Schaltzeiten gelten für die gesamte Zeit, die von der Änderung der Spannung bis zum Erreichen von 90 % der jeweiligen gesamten Änderung der Lichtintensität vergeht, also $\tau_{on} \equiv$ t(0%->90%) und $\tau_{off} \equiv$ t(100%->10%), umfassen also auch die jeweiligen Totzeiten (delay times). Da die Einzelschaltzeiten von der Ansteuerspannung abhängen, werden zur Verbesserung der Vergleichbarkeit der Ergebnisse auch die Summe der beiden Einzelschaltzeiten ($\Sigma = \tau_{on} + \tau_{off}$) bzw. die mittlere Schaltzeit ($\tau_{av.} = (\tau_{on} + \tau_{off})/2$) angegeben.

Die Voltage Holding Ratio wird in bei der Merck KGaA hergestellten Testzellen bestimmt. Die Messzellen haben Substrate aus Natriumglas (Sodalime Glas) und sind mit Polyimidorientierungsschichten (AL-3046 der Firma Japan Synthetic Rubber, Japan) mit einer Schichtdicke von 50 nm, die senkrecht zueinander gerieben sind ausgeführt. Die Schichtdicke beträgt einheitlich 6,0 $\mu$m. Die Fläche der durchsichtigen Elektroden aus ITO beträgt 1 $cm^2$.

Alle Konzentrationen sind für die Zwecke der vorliegenden Erfindung, soweit nicht explizit anders vermerkt, in Massenprozent angegeben und beziehen sich auf die entsprechende Mischung oder Mischungskomponente. Alle physikalischen Eigenschaften werden und wurden nach "Merck Liquid Crystals, Physical Properties of Liquid Crystals", Status Nov. 1997, Merck KGaA, Deutschland bestimmt und gelten für eine Temperatur von 20 °C, sofern nicht explizit anders angegeben. $\Delta n$ wird bei 589 nm und $\Delta\varepsilon$ bei 1 kHz bestimmt.

Die Rotationsviskosität wird mit der Methode des rotierenden Permanentmagneten und die Fließviskosität in einem modifizierten Ubbelohde-Viskosimeter bestimmt. Für die Flüssigkristallmischungen ZLI-2293, ZLI-4792 und MLC-6608, alle Produkte der Firma Merck KGaA, Darmstadt, Dezútschland, betragen die bei 20°C bestimmten Werte der Rotationsviskosität 161 mPa·s, 133 mPa·s bzw. 186 mPa·s und die der Fließviskosität (v) 21 $mm^2s^{-1}$ 14 $mm^2s^{-1}$ bzw. 27 $mm^2s^{-1}$.

Die Voltage Holding Ratio wird bei 20 °C und nach 5 Minuten im Ofen bei 100 °C bestimmt. Die verwendete Spannung hat eine Frequenz von 60 Hz.

Die erfindungsgemäßen Flüssigkristallmedien können bei Bedarf auch weitere Zusatzstoffe wie z.B. Stabilisatoren, pleochroitische Farbstoffe und chirale Dotierstoffe (als Komponente C) in den üblichen Mengen enthalten. Die eingesetzte Menge dieser Zusatzstoffe beträgt insgesamt 0 % oder mehr bis 10 % oder weniger bezogen auf die Menge der gesamten Mischung bevorzugt 0,1 % oder mehr bis 6 % oder weniger. Die Konzentration der einzelnen eingesetzten Verbindungen beträgt bevorzugt 0,1 % oder mehr bis 3 % oder weniger. Die Konzentration dieser und ähnlicher Zusatzstoffe wird bei der Angabe der Konzentrationen sowie der Konzentrationsbereiche der Flüssigkristallverbindungen in den Flüssigkristallmedien nicht berücksichtigt.

Die Zusammensetzungen bestehen aus mehreren Verbindungen, bevorzugt aus 3 oder mehr bis 30 oder weniger, besonders bevorzugt aus 6 oder mehr bis 20 oder weniger und ganz besonders bevorzugt aus 10 oder mehr bis 16 oder weniger Verbindungen, die auf herkömmliche Weise gemischt werden. In der Regel wird die gewünschte Menge der in geringerer Menge verwendeten Komponenten in den Komponenten gelöst, die den Hauptbestandteil der Mischung ausmachenden. Dies erfolgt zweckmäßigerweise bei erhöhter Temperatur. Liegt die gewählte Temperatur über dem Klärpunkt des Hauptbestandteils, so ist die Vervollständigung des Lösungsvorgangs besonders leicht zu beobachten. Es ist jedoch auch möglich, die Flüssigkristallmischungen auf anderen üblichen Wegen, z.B. unter Verwendung von Vormischungen oder aus einem sogenannten "Multi Bottle System" herzustellen.

Die nachstehenden Beispiele dienen zur Veranschaulichung der Erfindung. In den Beispielen sind der Schmelzpunkt T (C,N), der Übergang von der smektischen (S) zur nematischen (N) Phase T(S,N) und der Klärpunkt T(N,I) einer Flüssigkristallsubstanz in Grad Celsius angegeben.

Für die vorliegende Erfindung und in den folgenden Beispielen sind die Strukturen der Flüssigkristallverbindungen durch Acronyme angegeben, wobei die Transformation in chemische Formeln gemäß folgender Tabellen A bis C erfolgt. Alle Reste $C_nH_{2n+1}$, $C_mH_{2m+1}$ und $C_lH_{2l+1}$ bzw. $C_nH_{2n}$, $C_mH_{2m}$ und $C_lH_{2l}$ sind geradkettige Alkylreste bzw. Alkylenreste jeweils mit n, m bzw. l C-Atomen. In Tabelle A sind die Ringelemente der Kerne der Verbindung codiert, in Tabelle B sind die Brückenglieder aufgelistet und in Tabelle C sind die Bedeutungen der Symbole für die linken bzw. rechten Endgruppen der Moleküle aufgelistet. In Tabelle D sind exemplarisch Molekülstrukturen und deren Abkürzungen aufgelistet.

**Tabelle A: Ringelemente**

| | |
|---|---|
| C | 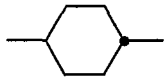 |
| D | 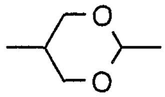 |
| DI | 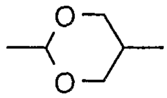 |
| A | 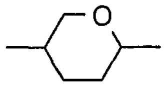 |
| AI | 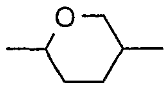 |
| P | 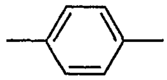 |
| G | 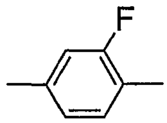 |
| GI | 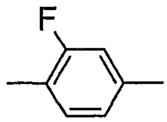 |
| U | 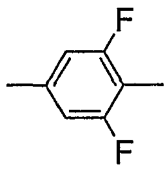 |
| UI | 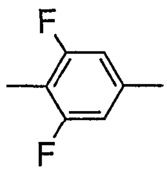 |
| Y | 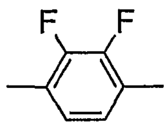 |
| Np | 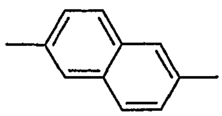 |
| tH | 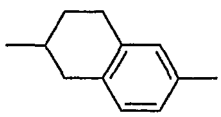 |

(fortgesetzt)

dH 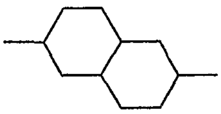

**Tabelle B: Brückenglieder**

| | | | |
|---|---|---|---|
| **E** | $-CH_2CH_2-$ | **Z** | -CO-O- |
| **V** | -CH=CH- | **ZI** | -O-CO- |
| **X** | -CF=CH- | **O** | $-CH_2-O-$ |
| **XI** | -CH=CF- | **OI** | $-O-CH_2-$ |
| **B** | -CF=CF- | **Q** | $-CF_2-O-$ |
| **T** | -C≡C- | **QI** | $-O-CF_2-$ |
| **W** | $-CF_2CF_2-$ | **T** | -C≡C- |

**Tabelle C: Endgruppen**

| **Links einzelstehend** | | **Rechts einzelstehend** | |
|---|---|---|---|
| **-n-** | $C_nH_{2n+1}-$ | **-n** | $-C_nH_{2n+1}$ |
| **-nO-** | $C_nH_{2n+1}O-$ | **-nO** | $-O\ C_nH_{2n+1}$ |
| **-V-** | $CH_2=CH-$ | **-V** | $-CH=CH_2$ |
| **-nV-** | $C_nH_{2n+1}-CH=CH-$ | **-nV** | $-C_nH_{2n}-CH=CH_2$ |
| **-Vn-** | $CH_2=CH-C_nH_{2n}-$ | **-Vn** | $-CH=CH-C_nH_{2n+1}$ |
| **-nVm-** | $C_nH_{2n+1}-CH=CH-C_mH_{2m}-$ | **-nVm** | $-C_nH_{2n}-CH=CH-C_mH_{2m+1}$ |
| **-N-** | N≡C- | **-N** | -C≡N |
| **-S-** | S=C=N- | **-S** | -N=C=S |
| **-F-** | F- | **-F** | -F |
| **-CL-** | Cl- | **-CL** | -Cl |
| **-M-** | $CFH_2-$ | **-M** | $-CFH_2$ |
| **-D-** | $CF_2H-$ | **-D** | $-CF_2H$ |
| **-T-** | $CF_3-$ | **-T** | $-CF_3$ |
| **-MO-** | $CFH_2O$ - | **-OM** | $-OCFH_2$ |
| **-DO-** | $CF_2HO$ - | **-OD** | $-OCF_2H$ |
| **-TO-** | $CF_3O$ - | **-OT** | $-OCF_3$ |
| **-A-** | H-C≡C- | **-A** | -C≡C-H |
| **-nA-** | $C_nH_{2n+1}-C\equiv C-$ | **-An** | $-C\equiv C-C_nH_{2n+1}$ |
| **-NA-** | NC-C≡C- | **-AN** | -C≡C-CN |
| **Links in Kombination** | | **Rechts in Kombination** | |
| **-... A...-** | -C≡C- | **-...A...** | -C≡C- |
| **-...V...-** | CH=CH- | **-...V...** | -CH=CH- |
| **-...Z...-** | -CO-O- | **-...Z...** | -CO-O- |
| **-...ZI...-** | -O-CO- | **-...ZI...** | -O-CO- |
| **-...K...-** | -CO- | **-...K...** | -CO- |
| **-...W...-** | -CF=CF- | **-...W...** | -CF=CF- |

worin n und m jeweils ganze Zahlen und die drei Punkte "..." Platzhalter für andere Abkürzungen aus dieser Tabelle sind.

**Tabelle D**

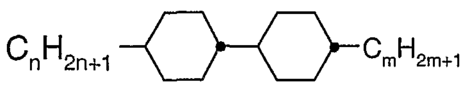

(fortgesetzt)

**CC-n-m**

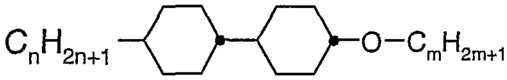

**CC-n-Om**

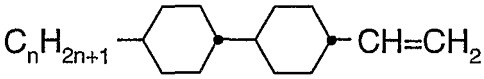

**CC-n-V**

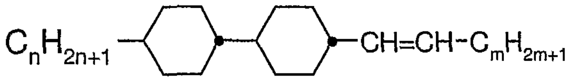

CC-n-Vm

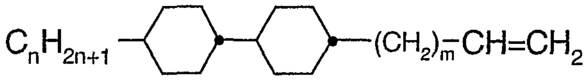

**CC-n-mV**

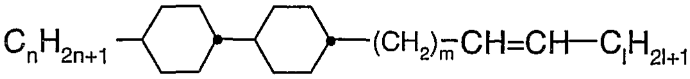

**CC-n-mVl**

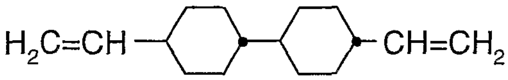

**CC-V-V**

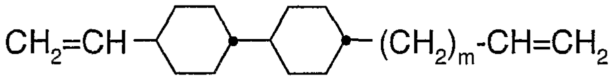

**CC-V-mV**

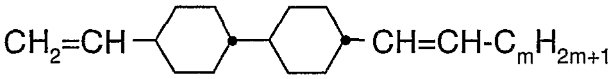

**CC-V-Vm**

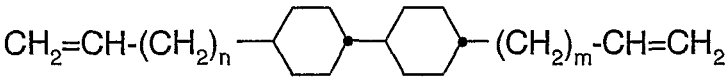

**CC-Vn-mV**

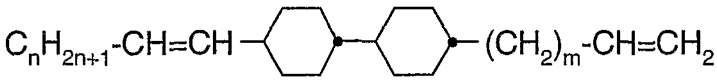

**CC-nV-mV**

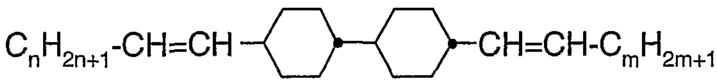

**CC-nV-Vm**

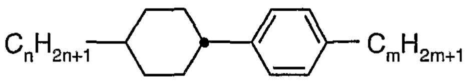

**CP-n-m**

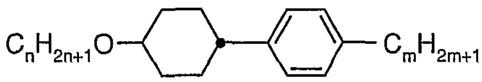

**CP-nO-m**

(fortgesetzt)

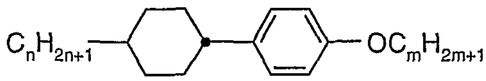

**CP-n-Om**

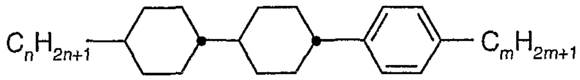

**CCP-n-m**

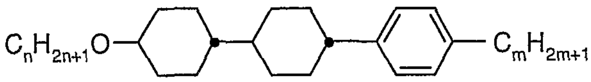

**CCP-nO-m**

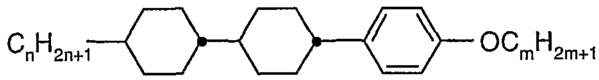

**CCP-n-Om**

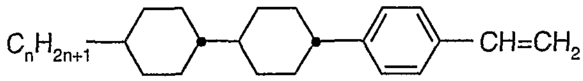

**CCP-n-V**

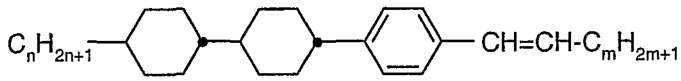

**CCP-n-Vm**

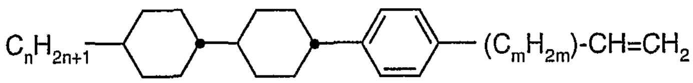

**CCP-n-mV**

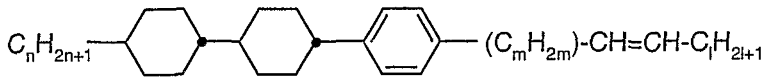

**CCP-n-mVl**

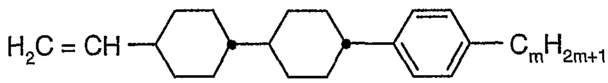

**CCP-V-m**

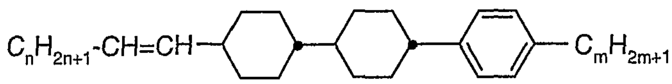

**CCP-nV-m**

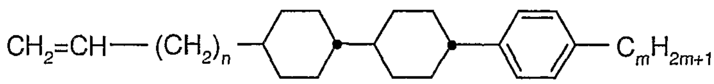

**CCP-Vn-m**

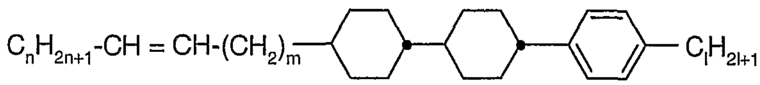

**CCP-nVm-l**

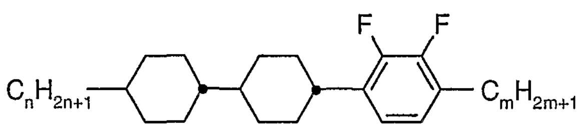

**CCY-n-m**

(fortgesetzt)

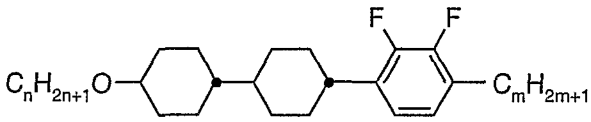

**CCY-nO-m**

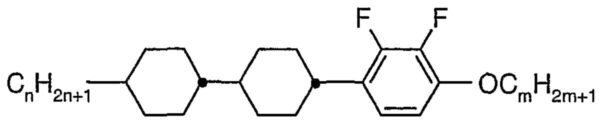

**CCY-n-Om**

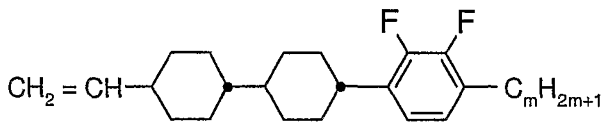

**CCY-V-m**

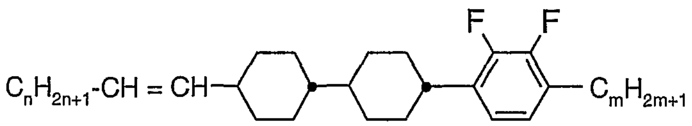

**CCY-nV-m**

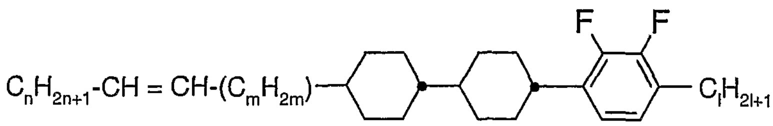

**CCY-nVm-l**

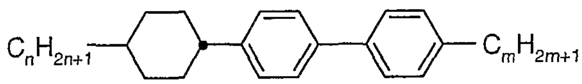

**CPP-n-m**

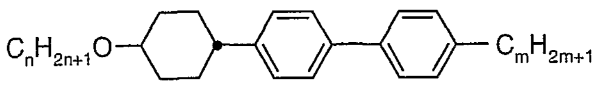

**CPP-nO-m**

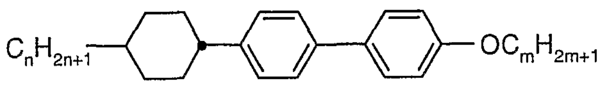

**CPP-n-Om**

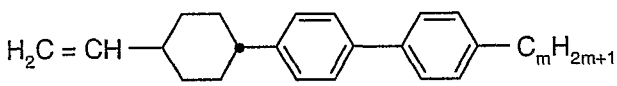

**CPP-V-m**

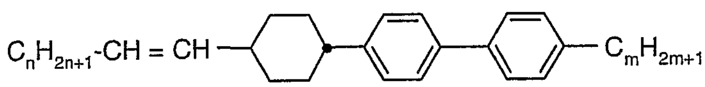

**CPP-nV-m**

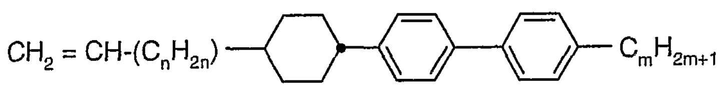

**CPP-Vn-m**

(fortgesetzt)

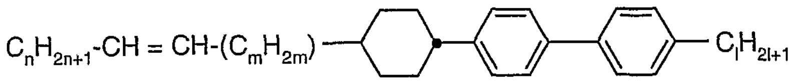

**CPP-nVm-l**

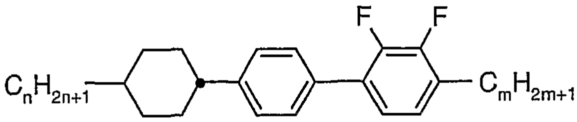

**CPY-n-m**

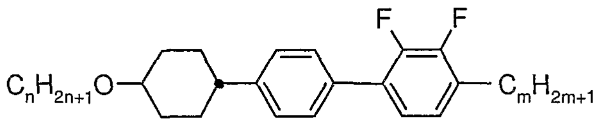

**CPY-nO-m**

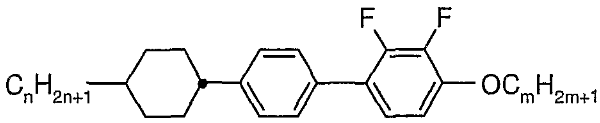

**CPY-n-Om**

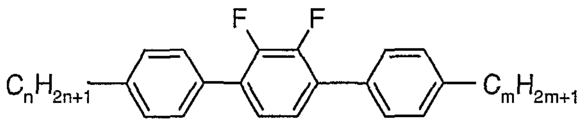

**PYP-n-m**

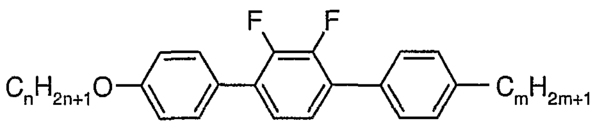

**PYP-nO-m**

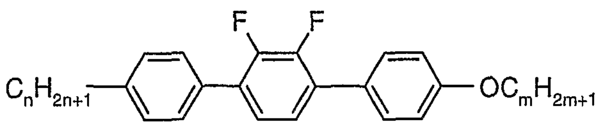

**PYP-n-Om**

## Tabelle E

Stabilisatoren, die beispielsweise den erfindungsgemäßen Mischungen zugesetzt werden können, werden nachfolgend genannt.

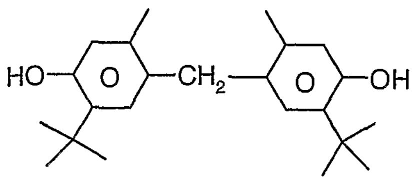

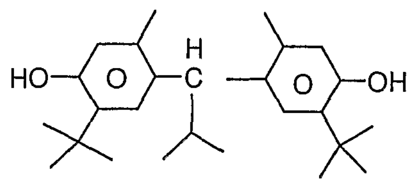

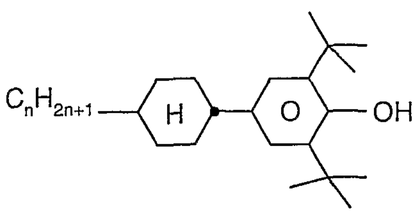

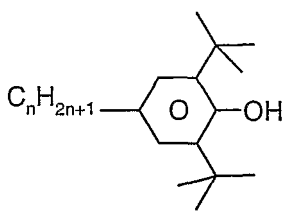

(fortgesetzt)

Stabilisatoren, die beispielsweise den erfindungsgemäßen Mischungen zugesetzt werden können, werden nachfolgend genannt.

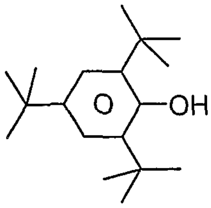

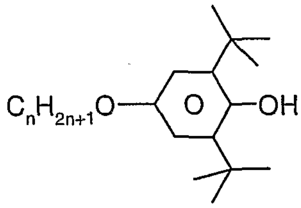

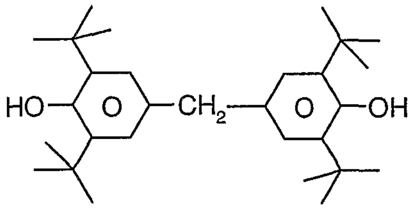

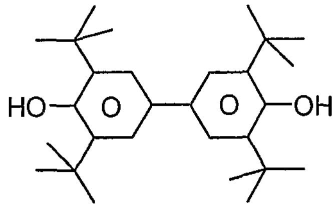

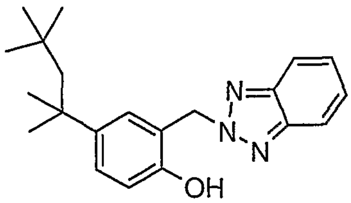

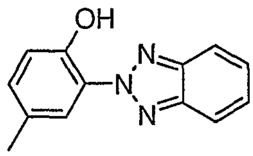

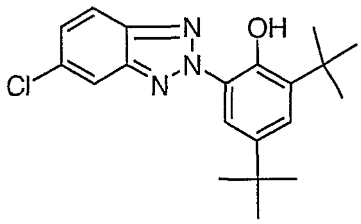

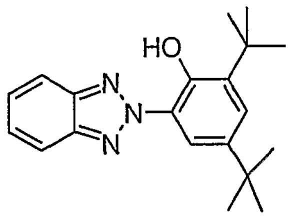

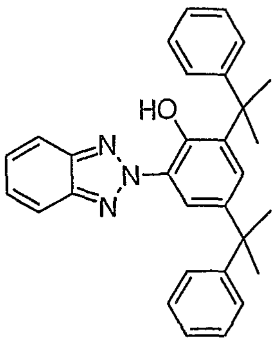

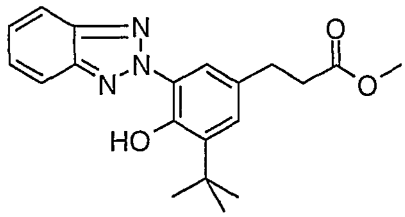

(fortgesetzt)

Stabilisatoren, die beispielsweise den erfindungsgemäßen Mischungen zugesetzt werden können, werden nachfolgend genannt.

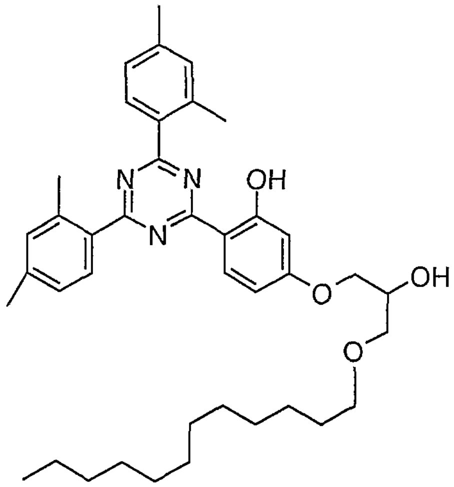

In einer bevorzugten Ausführungsform der vorliegenden Erfindung enthalten die erfindungsgemäßen Medien eine oder mehrere Verbindungen, ausgewählt aus der Gruppe der Verbindungen der Tabelle E.

**Tabelle F**

In der Tabelle F werden chirale Dotierstoffe genannt, die bevorzugt in den erfindungsgemäßen Mischungen eingesetzt werden.

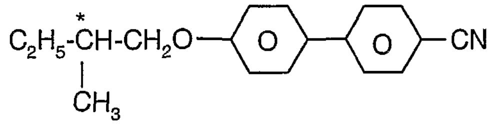

**C 15**

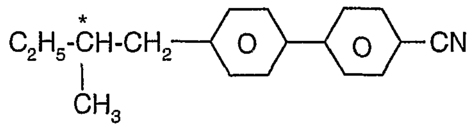

**CB 15**

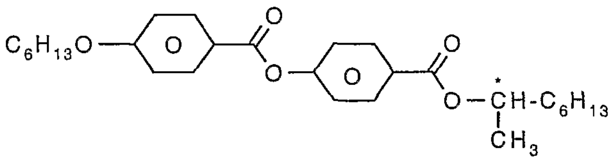

**R/S-811**

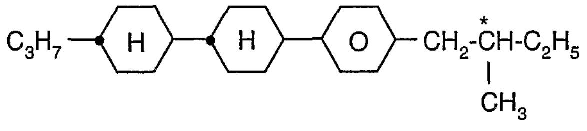

**CM 44**

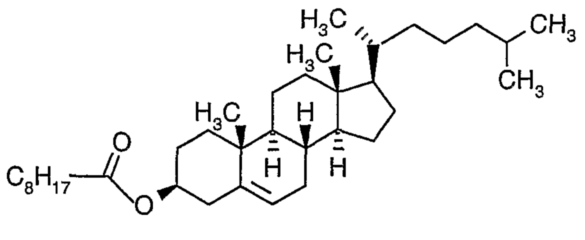

(fortgesetzt)

In der Tabelle F werden chirale Dotierstoffe genannt, die bevorzugt in den erfindungsgemäßen Mischungen eingesetzt werden.

CN

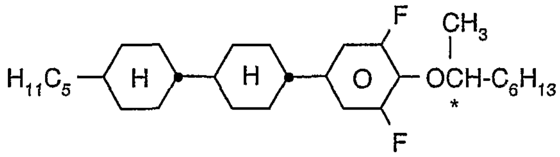

R/S-2011

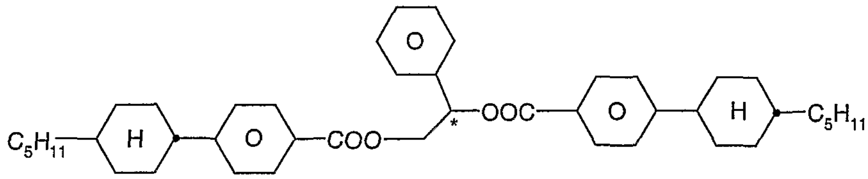

R/S-1011

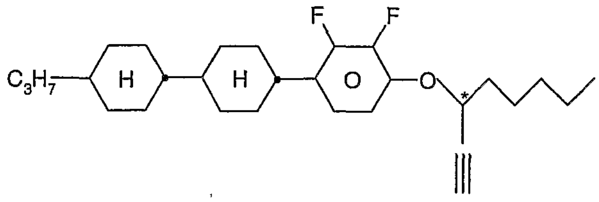

R/S-3011

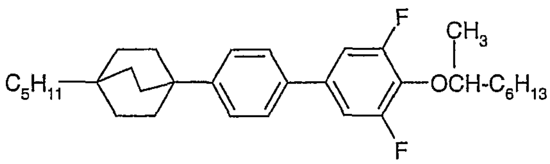

R/S-4011

Beispiele

Die folgenden Beispiele sollen die Erfindung erläutern. Sie illustrieren den Bereich an Eigenschaften, der bevorzugt realisiert werden kann, ebenso wie die bevorzugt einzusetzenden Verbindungen.

Die Flüssigkristallmedien werden bezüglich ihrer anwendungstechnischen Eigenschaften untersucht. Insbesondere werden ihre jeweiligen elektrooptischen Kennlinien, Schaltzeiten und ihre Voltage Holding Ratio in Testzellen bestimmt.

Die angegebenen Werte für die oben genannten Eigenschaften sind in der Regel Mittelwerte der Messungen von jeweils zwei Testzellen. Die Abweichungen zwischen den Ergebnissen der einzelnen Zellen betrugen in der Regel maximal 4 bis 5 %.

Beispiel 1

Es werden drei Flüssigkristallmischungen realisiert, die alle nahezu dieselben Werte des Klärpunkts, der Doppelbrechung, der dielektrischen Anisotropie und sogar der Rotationsviskosität aufweisen, sich jedoch signifikant im Wert der berechneten Peak-Zeiten bzw. der vorhergesagten Schaltzeiten ($t_{max}$ bzw. $t_{max}/\Delta n^2$) unterscheiden. Die Mischung M-2 ist eine Mischung die zu gleichen Teilen aus M1 und M-3 besteht. Die Zusammensetzungen der Mischungen sind in der folgenden Tabelle zusammengestellt, die Untersuchungsergebnisse in der übernächsten.

Tabelle 1a:

| Beispiel Nr. | 1-1 | 1-2 | 1-3 |
|---|---|---|---|
| Mischung Nr. | M-1 | M-2 | M-3 |
| Zusammensetzung | | | |
| Verbindung | Konzentration / % | | |
| CY-3-O4 | 18,0 | 15,0 | 12,0 |
| Cm-5-O2 | | 6,0 | 12,0 |
| CY-5-O4 | 13,0 | 12,5 | 12,0 |
| CCY-3-O2 | 8,0 | 9,5 | 11,0 |
| CCY-4-O2 | 8,0 | 4,0 | |
| CCY-5-O2 | | 5,0 | 10,0 |
| CCY-2-1 | 8,0 | 4,0 | |
| CCY-3-1 | 8,0 | 4,0 | |
| CPY-2-O2 | | 4,0 | 8,0 |
| PYP-2-3 | 5,0 | 2,5 | |
| CC-3-V | | 8,0 | 16,0 |
| CC-3-V1 | 8,0 | 8,5 | 9,0 |
| CC-4-V | 10,0 | 5,0 | |
| CC-3-4 | 8,0 | 4,0 | |
| CC-3-5 | 6,0 | 7,0 | 8,0 |
| CCP-V-1 | | 1,0 | 2,0 |
| $\Sigma$ | 100,0 | 100,0 | 100,0 |

Tabelle 1b:

| Beispiel Nr. | 1-1 | 1-2 | 1-3 |
|---|---|---|---|
| Mischung Nr. | M-1 | M-2 | M-3 |
| Physikalische Eigenschaften, | | | |
| T(N,I) /°C | 70,4 | 70,0 | 70,0 |
| $n_e$ [589 nm, 20 °C] | 1,5586 | 1,5588 | 1,5564 |
| $n_o$ [589 nm, 20 °C] | 1,4764 | 1,4767 | 1,4738 |
| $\Delta n$ [589 nm, 20 °C] | 0,0822 | 0,0821 | 0,0826 |
| $\varepsilon_{\parallel}$ [1 kHz, 20 °C] | 3,4 | 3,5 | 3,6 |
| $\varepsilon_{\perp}$ [1 kHz, 20 °C] | 6,6 | 6,9 | 7,4 |
| $\Delta\varepsilon$ [1 kHz, 20 °C] | -3,2 | -3,4 | -3,8 |
| $\varepsilon_{av.}$[1 kHz, 20 °C] | 5,53 | 5,83 | 6,13 |
| $\nu$ [20 °C] / $mm^2$ $s^{-1}$ | 20 | 18,5 | 17 |
| $\nu$ [0 °C] / $mm^2$ $s^{-1}$ | n.b. | n.b. | 55 |
| $\gamma_1$ [20 °C] mPa·s | 113 | 113 | 113 |
| $k_1$ [20 °C] / pN | 12,7 | 13,2 | 12,6 |
| $k_3$ [20 °C] / pN | 12,9 | 13,7 | 14,6 |

(fortgesetzt)

| Beispiel Nr. | 1-1 | 1-2 | 1-3 |
|---|---|---|---|
| Mischung Nr. | M-1 | M-2 | M-3 |
| Physikalische Eigenschaften, | | | |
| $k_3/k_1$ [20 °C] | 1,02 | 1,04 | 1,16 |
| $V_0$ [20 °C] / V | 2,14 | 2,11 | 2,08 |
| $V_{10}$ [20 °C] / V | 2,54 | 2,57 | 2,48 |
| Berechnete Zeiten | | | |
| $t_{max}$ / ms | 0,161 | 0,143 | 0,120 |
| $t_{max}/\Delta n^2$ / ms | 23,9 | 21,1 | 17,7 |
| Experimentelle Schaltzeiten: $\tau$(0 V $\Rightarrow$ 2 x $V_{10}$) | | | |
| $\tau_{on}$ [2x $V_{10}$, 20°C] / ms | 10,1 | 8,3 | 7,0 |
| $\tau_{off}$ [2x $V_{10}$, 20 °C] / ms | 10,6 | 10,0 | 10,8 |
| $\Sigma$ [2x $V_{10}$, 20 °C] / ms | 20,7 | 18,3 | 17,8 |

Bemerkung:

n.b. nicht bestimmt.

Wie aus den Ergebnissen zu ersehen ist, nimmt die Schaltzeit der Flüssigkristallanzeigen von Beispiel 1-1 über Beispiel 1-2 zu Beispiel 1-3 parallel mit der vorhergesagten Schaltzeit $t_{max}$ bzw. $t_{max}/\Delta n^2$, gemäß der Lehre der vorliegenden Erfindung, signifikant ab.

Beispiel 2

Es werden drei Flüssigkristallmischungen realisiert, die alle nahezu dieselben Werte des Klärpunkts, der Doppelbrechung, der dielektrischen Anisotropie, der Rotationsviskosität und sogar im Wert der berechneten Peak-Zeiten bzw. Schaltzeiten ($t_{max}$ bzw. $t_{max}/\Delta n^2$), aufweisen, sich jedoch signifikant in ihrer Zusammensetzung unterscheiden. Die Mischung M-5 ist eine Mischung, die zu gleichen Teilen aus M-4 und M-6 besteht. Die Zusammensetzungen der Mischungen sind in der folgenden Tabelle zusammengestellt, die Untersuchungsergebnisse in der übernächsten.

Tabelle 2a:

| Beispiel Nr. | 2-1 | 2-2 | 2-3 |
|---|---|---|---|
| Mischung Nr. | M-4 | M-5 | M-6 |
| Zusammensetzung | | | |
| Verbindung | Konzentration / % | | |
| CY-3-O2 | 16,0 | 8,0 | |
| CY-3-O4 | | 9,0 | 18,0 |
| CY-5-O2 | 14,0 | 7,0 | |
| CY-5-O4 | | 8,5 | 17,0 |
| CCY-3-O2 | 12,0 | 11,0 | 10,0 |
| CCY-5-O2 | 11,0 | 10,5 | 10,0 |
| CCY-2-1 | 9,0 | 4,5 | |
| CCY-3-1 | 8,0 | 4,0 | |
| CPY-2-O2 | | 5,0 | 10,0 |

(fortgesetzt)

| Beispiel Nr. | 2-1 | 2-2 | 2-3 |
|---|---|---|---|
| Mischung Nr. | M-4 | M-5 | M-6 |
| Zusammensetzung | | | |
| Verbindung | Konzentration / % | | |
| CPY-3-O2 | | 1,0 | 2,0 |
| CC-3-4 | 8,0 | 4,0 | |
| CC-3-5 | 9,0 | 10,5 | 12,0 |
| CC-5-O1 | | 3,0 | 6,0 |
| CC-5-V | | 7,5 | 15,0 |
| CP-5-3 | 7,0 | 3,5 | |
| CP-3-O1 | 6,0 | 3,0 | |
| $\Sigma$ | 100,0 | 100,0 | 100,0 |

Tabelle 2b:

| Beispiel Nr. | 2-1 | 2-2 | 2-3 |
|---|---|---|---|
| Mischung Nr. | M-4 | M-5 | M-6 |
| Physikalische Eigenschaften | | | |
| T(N,I) / °C | 71,0 | 70,0 | 70,0 |
| $n_e$ [589 nm, 20 °C] | 1,5587 | 1,5584 | 1,5567 |
| $n_o$ [589 nm, 20 °C] | 1,4765 | 1,4759 | 1,4746 |
| $\Delta n$ [589 nm, 20 °C] | 0,0822 | 0,0825 | 0,0821 |
| $\varepsilon_{\|\|}$ [1 kHz, 20 °C] | 3,6 | 3,7 | 3,7 |
| $\varepsilon_{\perp}$ [1 kHz, 20 °C] | 7,4 | 7,5 | 7,6 |
| $\Delta\varepsilon$ [1 kHz, 20 °C] | -3,8 | -3,9 | -3,9 |
| $\varepsilon_{av.}$ [1 kHz, 20 °C] | 6,13 | 6,23 | 6,3 |
| $\nu$ [20 °C] / $mm^2 s^{-1}$ | 21 | 21,5 | 22 |
| $\nu$ [0 °C] / $mm^2 s^{-1}$ | 67 | n.b. | n.b. |
| $\nu$ [-20 °C] / $mm^2 s^{-1}$ | 416 | n.b. | n.b. |
| $\nu$ [-30 °C] / $mm^2 s^{-1}$ | 1.380 | n.b. | n.b. |
| $\gamma_1$ [20 °C] mPa·s | 133 | 130 | 127 |
| $k_1$ [20 °C] / pN | 13,0 | 13,3 | 13,4 |
| $k_3$ [20 °C] / pN | 15,1 | 14,0 | 13,1 |
| $k_3/k_1$ [20 °C] | 1,15 | 1,05 | 0,98 |
| $V_0$ [20 °C] / V | 2,10 | 2,01 | 1,92 |
| $V_{10}$ [20 °C] / V | 2,53 | 2,44 | 2,40 |
| Berechnete Zeiten | | | |
| $t_{max}$ / ms | 0,147 | 0,145 | 0,147 |
| $t_{max}/\Delta n^2$ / ms | 21,8 | 21,3 | 21,8 |

(fortgesetzt)

| Experimentelle Schaltzeiten: $\tau$(0 V $\Rightarrow$ 2 x $V_{10}$) | | | |
|---|---|---|---|
| $\tau_{on}$ [2x $V_{10}$, 20 °C] / ms | 10,0 | 7,6 | 7,3 |
| $\tau_{off}$ [2x $V_{10}$, 20 °C] / ms | 11,7 | 12,0 | 11,4 |
| $\Sigma$ [2x $V_{10}$, 20 °C] / ms | 21,7 | 19,6 | 18,7 |

Bemerkung:

n.b. nicht bestimmt.

Wie aus den Ergebnissen zu ersehen ist, haben alle drei Mischungen dieses Beispiels, gemäß der Lehre der vorliegenden Erfindung entsprechend ihrem niedrigen Wert für $t_{max}$ bzw. $t_{max}/\Delta n^2$ gute Schaltzeiten.

Wie aus den Ergebnissen weiter zu ersehen ist, nimmt die Schaltzeit der die Flüssigkristallanzeigen von Beispiel 2-1 über Beispiel 2-2 zu Beispiel 2-3 parallel zur Änderung der Zusammensetzung der Mischungen, gemäß der bevorzugten Lehre der vorliegenden Erfindung, zusätzlich signifikant ab.

Die Flüssigkristallmischungen der Beispiele 1 und 2 zeichnen sich besonders durch gute Schaltzeiten aus, dies gilt insbesondere für die Mischungen M-2, M-3, M-5 und M-6. Die Flüssigkristallmischungen der Beispiele 1 und 2, besonders die vier gerade genannten Mischungen, können vorteilhaft in ECB-Anzeigen aller bekannten Bauarten, wie z.B: MVA, PVA und ASV, sowie auch in IPS- und PA LCD-Anzeigen verwendet werden.

## Patentansprüche

1. Nematisches Flüssigkristallmedium mit negativer dielektrischer Anisotropie, **dadurch gekennzeichnet, dass** es eine Peak-Zeit ($t_{max}$), die mit Hilfe der Gleichungen (1) und (2)

$$I(\theta_b) = \frac{S(2\alpha_1 \sin^2\theta_b \cos^2\theta_b - \gamma_2 \cos 2\theta_b + \gamma_3)(\varepsilon_0 \Delta\varepsilon \sin 2\theta_b)^2 E_b^3}{(\alpha_1\gamma_1 + \gamma_2^2)\sin^2 2\theta_b - \gamma_1^2 - \gamma_2^2 + 2\gamma_1\gamma_3}$$

Gleichung (1)

$$t(\theta_b) = \frac{\beta_2}{2\varepsilon_0 \Delta\varepsilon E_b^2 \beta_3}\left\{-\ln\left(\frac{\tan\theta_b}{\tan\theta_0}\right) + \frac{-\beta_5 + \gamma_2\sqrt{\beta_1}}{2\beta_4\sqrt{\beta_1}}\ln\left(\frac{\beta_4\tan^2\theta_b + \beta_7 + \sqrt{\beta_1}}{\beta_4\tan^2\theta_0 + \beta_7 + \sqrt{\beta_1}}\right) + \frac{\beta_5 + \gamma_2\sqrt{\beta_1}}{2\beta_4\sqrt{\beta_1}}\ln\left(\frac{\beta_4\tan^2\theta_b + \beta_7 - \sqrt{\beta_1}}{\beta_4\tan^2\theta_0 + \beta_7 - \sqrt{\beta_1}}\right)\right\}$$
$$+ \frac{\beta_6}{2\varepsilon_0 \Delta\varepsilon E_b^2 \sqrt{\beta_1}}\ln\left[\frac{(\alpha_1\cos 2\theta_b + \gamma_2 + \sqrt{\beta_1})(\alpha_1\cos 2\theta_0 + \gamma_2 - \sqrt{\beta_1})}{(\alpha_1\cos 2\theta_b + \gamma_2 - \sqrt{\beta_1})(\alpha_1\cos 2\theta_0 + \gamma_2 + \sqrt{\beta_1})}\right]$$

Gleichung (2)

mit:

S = Elektrodenfläche,
$E_b$ = U/l
U = 90V,
l = 22 $\mu$m,
$\theta_0$ = Bulk-Tiltwinkel zum Zeitpunkt t=0,
$\theta_b$ = Bulk-Tiltwinkel,
$\alpha_1$ bis $\alpha_5$ = Leslie Viskositätskoeffizienten,

$$\beta_1 = \alpha_1^2 + \gamma_2^2 + 2\alpha_1\gamma_3,$$

$$\beta_2 = \gamma_1^2 + \gamma_2^2 - 2\gamma_1\gamma_3,$$

$$\beta_3 = \gamma_2 - \gamma_3,$$

$$\beta_4 = \gamma_2 + \gamma_3,$$

$$\beta_5 = \gamma_2^2 + \alpha_1\gamma_3,$$

$$\beta_6 = \alpha_1\gamma_1 + \gamma_2^2,$$

$$\beta_7 = \alpha_1 + \gamma_3,$$

$$\gamma_1 = -\alpha_2 = \text{Rotationsviskosität},$$

$$\gamma_2 = \alpha_3 - \alpha_2,$$

$$\gamma_3 = \alpha_3 + \alpha_4 + \alpha_5,$$

$$\alpha_1 = -10\ \text{mPa}\cdot\text{s}$$

und

$$\alpha_3 = 0\ \text{mPa}\cdot\text{s}.$$

$$\alpha_4 + \alpha_5 = -\alpha_2 + 2\eta_2 = \gamma_1 + 2\eta_2,$$

$$\eta_2 \approx \rho * \nu$$

mit:

$\rho$ = Dichte = ca. 1 g/cm$^3$ und
$\nu$ = Fließviskosität,

wobei die Rotationsviskosität mit der Methode des rotierenden Permanentmagneten und die Fließviskosität in einem modifizierten Ubbelohde-Viskosimeter bestimmt wird,

bestimmt wird, von 0,25 ms oder weniger,
eine dielektrische Anisotropie bei einer Temperatur von 20 °C und bei 1 kHz im Bereich von -3,0 oder weniger bis -4,0 oder mehr und
eine Doppelbrechung bei einer Temperatur von 20 °C und bei 589 nm im Bereich von 0,070 bis 0,110 aufweist und

a) eine oder mehrere Verbindungen der Formel I, ausgewählt aus der Gruppe der Verbindungen der Formeln I-1 bis I-5

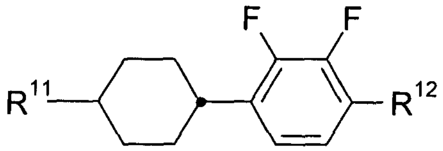

I-1

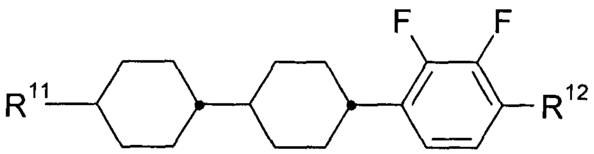

I-2

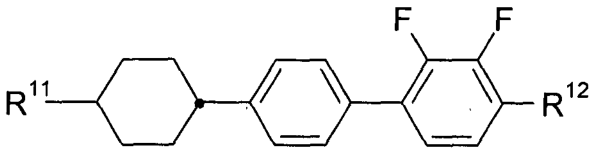

I-3

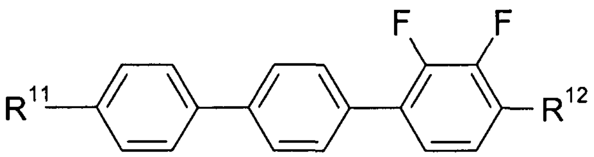

I-4

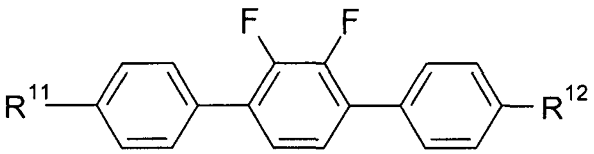

I-5

worin

$R^{11}$ und $R^{12}$ unabhängig voneinander Alkyl mit 1 bis 7 C-Atomen, Alkoxy mit 1 bis 7 C-Atomen oder Alkoxyalkyl, Alkenyl oder Alkenyloxy mit 2 bis 7 C-Atomen, wobei in allen Gruppen eine oder mehrere H-Atome durch Halogenatome ersetzt sein können,

b) eine oder mehrere dielektrisch neutrale Verbindungen der Formel II

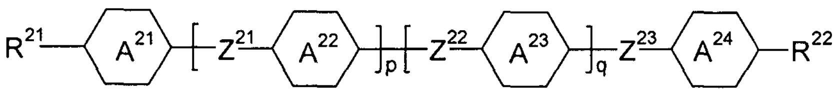

II

worin

$R^{21}$ und $R^{22}$, unabhängig voneinander, Alkyl mit 1 bis 7 C-Atomen, Alkoxy mit 1 bis 7 C-Atomen, oder Alkoxyalkyl, Alkenyl oder Alkenyloxy mit 2 bis 7 C-Atomen, wobei in allen Gruppen eine oder mehrere H-Atome durch Halogenatome ersetzt sein können,
$Z^{21}$ bis $Z^{23}$ , jeweils unabhängig voneinander, $-CH_2-CH_2-$, -C=C-, -CH=CH-, -CF=CF-, -CF=CH-, -CH=CF-, $-CH_2-CF_2-$, $-CF_2-CH_2-$, $-CF_2-CF_2-$, -CO-O-, -O-CO-, $-OCH_2-$, $-CH_2O-$, $-OCF_2$, $-CF_2O-$ oder eine Einfachbindung,

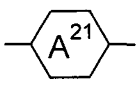 bis 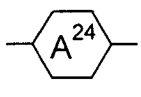 ,

jeweils unabhängig voneinander,

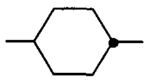 , 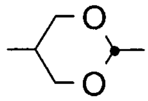 , 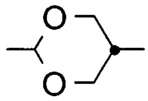 , 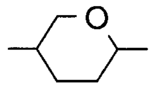 ,

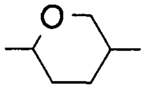 , 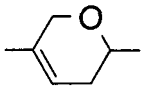 , 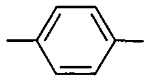 , 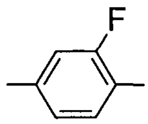 ,

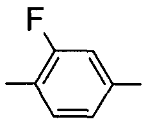 , 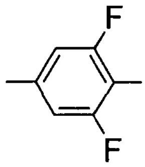 , 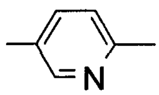 , 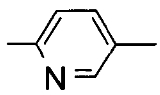 ,

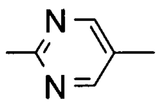 , oder 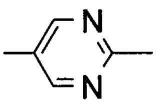 ,

p und q, jeweils unabhängig voneinander, 0 oder 1 bedeuten,

enthält und
die Konzentration der Verbindungen
ausgewählt aus der Gruppe der Verbindungen der Formeln I-1 bis I-5 und II 95 % oder mehr,
ausgewählt aus der Gruppe der Verbindungen der Formeln I-1 bis I-5 60 % oder mehr bis 70 % oder weniger und der Formel I-1 30 % oder mehr bis 40 % oder weniger
beträgt.

2. Flüssigkristallmedium nach Anspruch 1, **dadurch gekennzeichnet, dass** es einen Wert des Quotienten aus der Peak-Zeit und dem Quadrat der Doppelbrechung ($t_{max}/\Delta n^2$) von 22 ms oder weniger aufweist.

3. Flüssigkristallmedium nach mindestens einem der Ansprüche 1 und 2, **dadurch gekennzeichnet, dass** es einen Mittelwert der dielektrischen Konstanten im Bereich von 5,5 oder mehr bis 6,5 oder weniger aufweist.

4. Flüssigkristallmedium nach mindestens einem der Ansprüche 1 bis 3, **dadurch gekennzeichnet, dass** es einen Betrag der dielektrischen Anisotropie im Bereich von 3,5 oder mehr bis 3,9 oder weniger oder eine Doppelbrechung im Bereich von 0,070 bis 0,100 oder beides aufweist.

5. Flüssigkristallmedium nach mindestens einem der Ansprüche 1 bis 4, **dadurch gekennzeichnet, dass** es

   c) eine chirale Komponente (Komponente C) enthält.

6. Flüssigkristallmedium nach mindestens einem der Ansprüche 1 bis 5, **dadurch gekennzeichnet, dass** die Konzentration der Verbindungen der Formeln I-1 bis I-5 und II 98 % oder mehr beträgt.

7. Flüssigkristallmedium nach mindestens einem der Ansprüche 1 bis 6, **dadurch gekennzeichnet, dass** die Konzentration der Verbindungen der Formel I-1 32 % oder mehr bis 39 % oder weniger beträgt.

8. Flüssigkristallmedium nach mindestens einem der Ansprüche 1 bis 7, **dadurch gekennzeichnet, dass** die Konzentration der Verbindungen der Formeln I-2 18 % oder mehr bis 32 % oder weniger beträgt.

**9.** Flüssigkristallmedium nach mindestens einem der Ansprüche 1 bis 8, **dadurch gekennzeichnet, dass** die Konzentration der Verbindungen der Formel I-3 10 % oder mehr bis 20 % oder weniger beträgt.

**10.** Flüssigkristallmedium nach mindestens einem der Ansprüche 1 bis 9, **dadurch gekennzeichnet, dass** die Konzentration der Verbindungen ausgewählt aus der Gruppe der Formeln I-4 und I-5 0 % oder mehr bis 5 % oder weniger beträgt.

**11.** Flüssigkristallmedium nach einem oder mehreren der Ansprüche 1 bis 10, **dadurch gekennzeichnet, dass** es eine oder mehrere Verbindungen der Formel II-3a

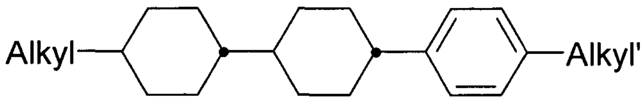

II-3a

worin Alkyl und Alkyl', unabhängig voneinander, Alkyl mit 1 bis7 C-Atomen bedeuten
enthält.

**12.** Verwendung eines Flüssigkristallmediums nach mindestens einem der Ansprüche 1 bis 11 in einer elektrooptischen Anzeige.

**13.** Elektrooptische Anzeige enthaltend ein Flüssigkristallmedium nach mindestens einem der Ansprüche 1 bis 11.

**14.** Anzeige nach Anspruch 13, **dadurch gekennzeichnet, dass** sie eine Vorrichtung zur Ansteuerung der Anzeige mit einer Aktiven Matrix, wie etwa einer Matrix von Dünnschichttransistoren (TFTs), umfaßt.

**15.** Verfahren zur Optimierung der Schaltzeit einer Flüssigkristallanzeige, **dadurch gekennzeichnet, dass** ein Flüssigkristallmedium nach mindestens einem der Ansprüche 1 bis 11 verwendet wird.

## Claims

**1.** Nematic liquid-crystal medium having negative dielectric anisotropy, **characterised in that** it has a peak time ($t_{max}$), determined with the aid of equations (1) and (2),

$$I(\theta_b) = \frac{S(2\alpha_1 \sin^2\theta_b \cos^2\theta_b - \gamma_2 \cos 2\theta_b + \gamma_3)(\varepsilon_0 \Delta\varepsilon \sin 2\theta_b)^2 E_b^3}{(\alpha_1\gamma_1 + \gamma_2^2)\sin^2 2\theta_b - \gamma_1^2 - \gamma_2^2 + 2\gamma_1\gamma_3}$$

equation (1)

$$t(\theta_b) = \frac{\beta_2}{2\varepsilon_0 \Delta\varepsilon E_b^2 \beta_3}\left\{-\ln\left(\frac{\tan\theta_b}{\tan\theta_0}\right) + \frac{-\beta_5 + \gamma_2\sqrt{\beta_1}}{2\beta_4\sqrt{\beta_1}}\ln\left(\frac{\beta_4\tan^2\theta_b + \beta_7 + \sqrt{\beta_1}}{\beta_4\tan^2\theta_0 + \beta_7 + \sqrt{\beta_1}}\right) + \frac{\beta_5 + \gamma_2\sqrt{\beta_1}}{2\beta_4\sqrt{\beta_1}}\ln\left(\frac{\beta_4\tan^2\theta_b + \beta_7 - \sqrt{\beta_1}}{\beta_4\tan^2\theta_0 + \beta_7 - \sqrt{\beta_1}}\right)\right\} + \frac{\beta_6}{2\varepsilon_0 \Delta\varepsilon E_b^2\sqrt{\beta_1}}\ln\left[\frac{(\alpha_1\cos 2\theta_b + \gamma_2 + \sqrt{\beta_1})(\alpha_1\cos 2\theta_0 + \gamma_2 - \sqrt{\beta_1})}{(\alpha_1\cos 2\theta_b + \gamma_2 - \sqrt{\beta_1})(\alpha_1\cos 2\theta_0 + \gamma_2 + \sqrt{\beta_1})}\right]$$

equation (2)

where:

S = electrode area,
$E_b$ = U/l,

$U$ = 90 V,
$l$ = 22 μm,
$\theta_0$ = bulk tilt angle at time t = 0
$\theta_b$ = bulk tilt angle
$\alpha_1$ to $\alpha_5$ = Leslie viscosity coefficients,

$$\beta_1 = \alpha_1^2 + \gamma_2^2 + 2\alpha_1\gamma_3,$$

$$\beta_2 = \gamma_1^2 + \gamma_2^2 - 2\gamma_1\gamma_3,$$

$$\beta_3 = \gamma_2 - \gamma_3$$

$$\beta_4 = \gamma_2 + \gamma_3,$$

$$\beta_5 = \gamma_2^2 + \alpha_1\gamma_3,$$

$$\beta_6 = \alpha_1\gamma_1 + \gamma_2^2,$$

$$\beta_7 = \alpha_1 + \gamma_3$$

$$\gamma_1 = -\alpha_2 = \text{rotational viscosity},$$

$$\gamma_2 = \alpha_3 - \alpha_2,$$

$$\gamma_3 = \alpha_3 + \alpha_4 + \alpha_5,$$

$$\alpha_1 = -10 \text{ mPa·s and}$$

$$\alpha_3 = 0 \text{ mPa·s},$$

$$\alpha_4 + \alpha_5 = -\alpha_2 + 2\eta_2 = \gamma_1 + 2\eta_2,$$

$$\eta_2 \approx \rho * \nu$$

where:

$\rho$ = density = about 1 g/cm$^3$ and
$\nu$ = flow viscosity,

where the rotational viscosity is determined using the rotating permanent magnet method and the flow viscosity is determined in a modified Ubbelohde viscometer,
of 0.25 ms or less,

a dielectric anisotropy at a temperature of 20°C and at 1 kHz in the range from -3.0 or less to -4.0 or more and a birefringence at a temperature of 20°C and at 589 nm in the range from 0.070 to 0.110 and

a) one or more compounds of the formula I, selected from the group of the compounds of the formulae I-1 to I-5

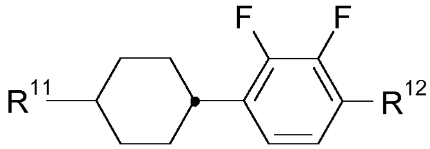

I-1

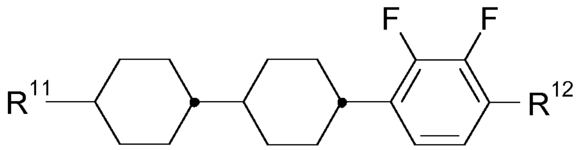

I-2

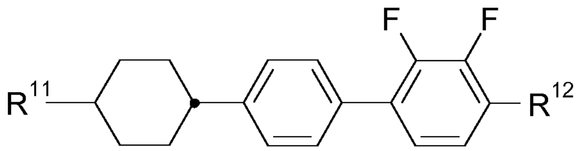

I-3

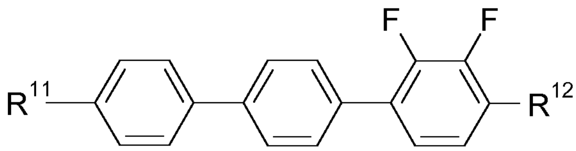

I-4

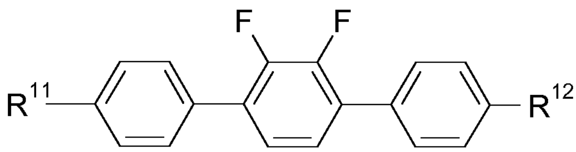

I-5

in which

$R^{11}$ and $R^{12}$, independently of one another, denote alkyl having 1 to 7 C atoms, alkoxy having 1 to 7 C atoms or alkoxyalkyl, alkenyl or alkenyloxy having 2 to 7 C atoms, where in all groups one or more H atoms may be replaced by halogen atoms,

b) one or more dielectrically neutral compounds of the formula II

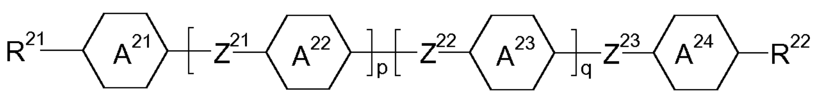

II

in which

$R^{11}$ and $R^{12}$, independently of one another, denote alkyl having 1 to 7 C atoms, alkoxy having 1 to 7 C atoms or alkoxyalkyl, alkenyl or alkenyloxy having 2 to 7 C atoms, where in all groups one or more H atoms may be replaced by halogen atoms,

$Z^{21}$ to $Z^{23}$ in each case, independently of one another, de-note $-CH_2-CH_2-$, -C=C-, -CH=CH-, -CF=CF-, -CF=CH-, -CH=CF-, $-CH_2-CF_2-$, $-CF_2-CH_2-$, $-CF_2-CF_2-$, -CO-O-, -O-CO-, $-OCH_2-$, $-CH_2O-$, $-OCF_2-$, $-CF_2O-$ or a single bond,

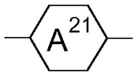 to 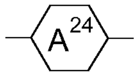

in each case, independently of one another, denote

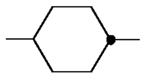, 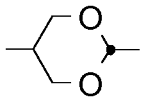, 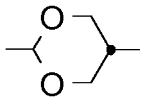, 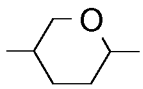,

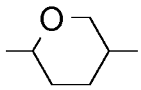, 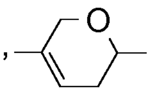, 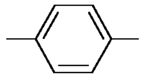, 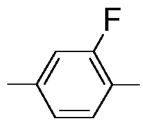,

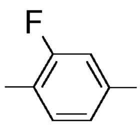, 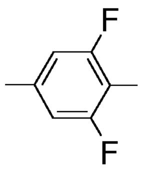, 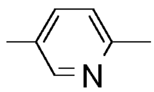, 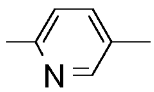,

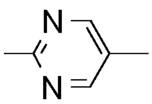, or 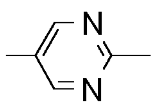,

p and q in each case, independently of one another, denote 0 or 1,

and
the concentration of the compounds
selected from the group of the compounds of the formulae I-1 to I-5 and II is 95% or more,
selected from the group of the compounds of the formulae I-1 to I-5 is 60% or more to 70% or less and
of the formula I-1 is 30% or more to 40% or less.

**2.** Liquid-crystal medium according to Claim 1, **characterised in that** it has a value of the quotient of the peak time and the square of the birefringence ($t_{max}/\Delta n^2$) of 22 ms or less.

**3.** Liquid-crystal medium according to at least one of Claims 1 and 2, **characterised in that** it has an average of the dielectric constants in the range from 5.5 or more to 6.5 or less.

**4.** Liquid-crystal medium according to at least one of Claims 1 to 3, **characterised in that** it has an absolute value of the dielectric anisotropy in the range from 3.5 or more to 3.9 or less or a birefringence in the range from 0.070 to 0.100 or both.

**5.** Liquid-crystal medium according to at least one of Claims 1 to 4, **characterised in that** it comprises

c) a chiral component (component C).

**6.** Liquid-crystal medium according to at least one of Claims 1 to 5, **characterised in that** the concentration of the compounds of the formulae I-1 to I-5 and II is 98% or more.

**7.** Liquid-crystal medium according to at least one of Claims 1 to 6, **characterised in that** the concentration of the compounds of the formula I-1 is 32% or more to 39% or less.

**8.** Liquid-crystal medium according to at least one of Claims 1 to 7, **characterised in that** the concentration of the

compounds of the formula I-2 is 18% or more to 32% or less.

**9.** Liquid-crystal medium according to at least one of Claims 1 to 8, **characterised in that** the concentration of the compounds of the formula I-3 is 10% or more to 20% or less.

**10.** Liquid-crystal medium according to at least one of Claims 1 to 9, **characterised in that** the concentration of the compounds selected from the group of the formulae I-4 and I-5 is 0% or more to 5% or less.

**11.** Liquid-crystal medium according to one or more of Claims 1 to 10, **characterised in that** it comprises one or more compounds of the formula II-3a

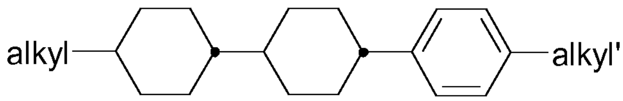

II-3a

in which alkyl and alkyl', independently of one another, denote alkyl having 1 to 7 C atoms.

**12.** Use of a liquid-crystal medium according to at least one of Claims 1 to 11 in an electro-optical display.

**13.** Electro-optical display containing a liquid-crystal medium according to at least one of Claims 1 to 11.

**14.** Display according to Claim 13, **characterised in that** it comprises a device for addressing the display having an active matrix, such as, for example, a matrix of thin-film transistors (TFTs).

**15.** Method for optimising the response time of a liquid-crystal display, **characterised in that** a liquid-crystal medium according to at least one of Claims 1 to 11 is used.

**Revendications**

**1.** Milieu cristallin liquide nématique présentant une anisotropie diélectrique négative, **caractérisé en ce qu'**il présente un temps de crête ($t_{max}$), déterminé à l'aide des équations (1) et (2) :

$$I(\theta_b) = \frac{S(2\alpha_1 \sin^2\theta_b \cos^2\theta_b - \gamma_2 \cos 2\theta_b + \gamma_3)(\varepsilon_0 \Delta\varepsilon \sin 2\theta_b)^2 E_b^3}{(\alpha_1\gamma_1 + \gamma_2^2)\sin^2 2\theta_b - \gamma_1^2 - \gamma_2^2 + 2\gamma_1\gamma_3}$$

équation (1)

$$t(\theta_b) = \frac{\beta_2}{2\varepsilon_0 \Delta\varepsilon E_b^2 \beta_3}\left\{-\ln\left(\frac{\tan\theta_b}{\tan\theta_0}\right) + \frac{-\beta_5 + \gamma_2\sqrt{\beta_1}}{2\beta_4\sqrt{\beta_1}}\ln\left(\frac{\beta_4\tan^2\theta_b + \beta_7 + \sqrt{\beta_1}}{\beta_4\tan^2\theta_0 + \beta_7 + \sqrt{\beta_1}}\right) + \frac{\beta_5 + \gamma_2\sqrt{\beta_1}}{2\beta_4\sqrt{\beta_1}}\ln\left(\frac{\beta_4\tan^2\theta_b + \beta_7 - \sqrt{\beta_1}}{\beta_4\tan^2\theta_0 + \beta_7 - \sqrt{\beta_1}}\right)\right\} + \frac{\beta_6}{2\varepsilon_0 \Delta\varepsilon E_b^2\sqrt{\beta_1}}\ln\left[\frac{(\alpha_1\cos 2\theta_b + \gamma_2 + \sqrt{\beta_1})(\alpha_1\cos 2\theta_0 + \gamma_2 - \sqrt{\beta_1})}{(\alpha_1\cos 2\theta_b + \gamma_2 - \sqrt{\beta_1})(\alpha_1\cos 2\theta_0 + \gamma_2 + \sqrt{\beta_1})}\right]$$

équation (2)

équations dans lesquelles :

S = aire d'électrode,
$E_b$ = U/l,
U = 90V,

l = 22 μm,
$\theta_0$ = angle d'inclinaison dans la masse à l'instant t = 0
$\theta_b$ = angle d'inclinaison dans la masse
$\alpha_1$ à $\alpha_5$ = coefficients de viscosité de Leslie,

$$\beta_1 = \alpha_1^2 + \gamma_2^2 + 2\alpha_1\gamma_3,$$

$$\beta_2 = \gamma_1^2 + \gamma_2^2 - 2\gamma_1\gamma_3,$$

$$\beta_3 = \gamma_2 - \gamma_3$$

$$\beta_4 = \gamma_2 + \gamma_3,$$

$$\beta_5 = \gamma_2^2 + \alpha_1\gamma_3,$$

$$\beta_6 = \alpha_1\gamma_1 + \gamma_2^2,$$

$$\beta_7 = \alpha_1 + \gamma_3$$

$$\gamma_1 = -\alpha_2 = \text{viscosité en rotation},$$

$$\gamma_2 = \alpha_3 - \alpha_2,$$

$$\gamma_3 = \alpha_3 + \alpha_4 + \alpha_5,$$

$$\alpha_1 = -10 \text{ mPa·s et}$$

$$\alpha_3 = 0 \text{ mPa·s},$$

$$\alpha_4 + \alpha_5 = -\alpha_2 + 2\eta_2 = \gamma_1 + 2\eta_2,$$

$$\eta_2 \approx \rho * \nu$$

où :

$\rho$ = densité = environ 1 g/cm$^3$ et
$\nu$ = viscosité à l'écoulement,

où la viscosité en rotation est déterminée en utilisant le procédé par aimant(s) permanent(s) tournant(s) et la viscosité à l'écoulement est déterminée dans un viscosimètre de Ubbelohde modifié,
de 0,25 ms ou moins,
une anisotropie diélectrique à une température de 20°C et à 1 kHz dans la plage de -3,0 ou moins à -4,0 ou plus et

une biréfringence à une température de 20°C et à 589 nm dans la plage de 0,070 à 0,110 et

a) un ou plusieurs composé(s) de la formule I, sélectionné(s) parmi le groupe des composés des formules I-1 à I-5 :

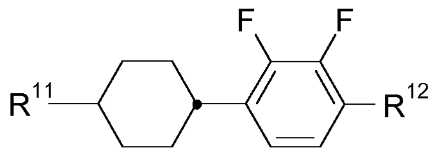

I-1

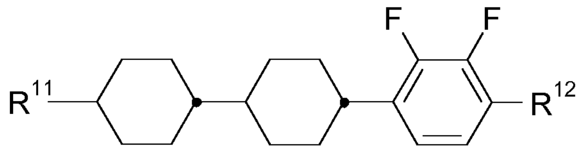

I-2

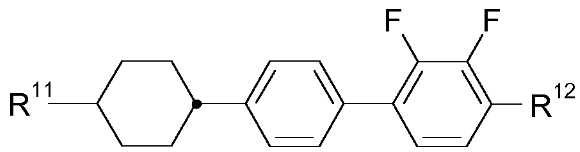

I-3

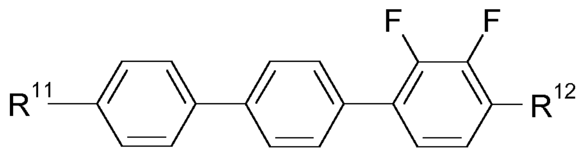

I-4

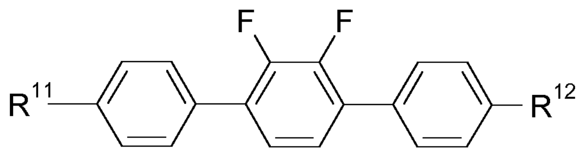

I-5

formules dans lesquelles :

$R^{11}$ et $R^{12}$ représentent, indépendamment l'un de l'autre, alkyle qui comporte 1 à 7 atome(s) de C, alcoxy qui comporte 1 à 7 atome(s) de C ou alcoxyalkyle, alkényle ou alkényloxy qui comporte 2 à 7 atomes de C, où, dans tous les groupes, un ou plusieurs atome(s) de H peut/peuvent être remplacé(s) par des atomes d'halogène,

b) un ou plusieurs composé(s) diélectriquement neutre(s) de la formule II :

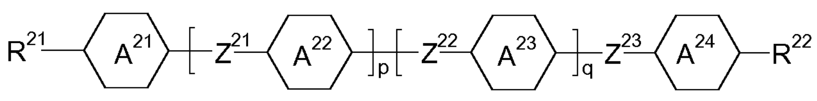

II

formule dans laquelle :

$R^{11}$ et $R^{12}$ représentent, indépendamment l'un de l'autre, alkyle qui comporte 1 à 7 atome(s) de C, alcoxy qui comporte 1 à 7 atome(s) de C ou alcoxyalkyle, alkényle ou alkényloxy qui comporte 2 à 7 atomes de C, où, dans tous les groupes, un ou plusieurs atome(s) H peut/peuvent être remplacé(s) par des atomes d'halogène,

$Z^{21}$ à $Z^{23}$ représentent dans chaque cas, indépendamment les uns des autres, $-CH_2-CH_2-$, -C=C-, -CH=CH-, -CF=CF-, -CF=CH-, -CH=CF-, $-CH_2-CF_2-$, $-CF_2-CH_2-$, $-CF_2-CF_2-$, -CO-O-, -O-CO-, $-OCH_2-$, $-CH_2O-$, $-OCF_2-$, $-CF_2O-$ ou une liaison simple,

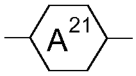 à 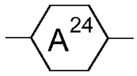

représentent dans chaque cas, indépendamment les uns des autres,

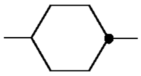, 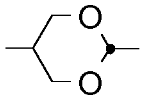, 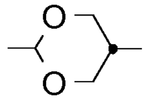, 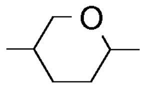,

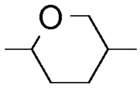, 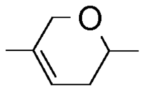, 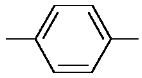, 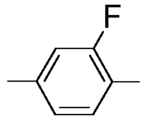,

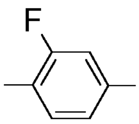, 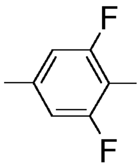, 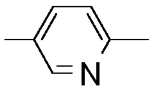, 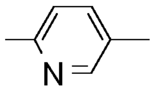,

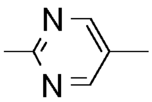 ou 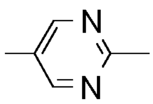,

p et q représentent dans chaque cas, indépendamment l'un de l'autre, 0 ou 1,

et
la concentration des composés :
qui sont sélectionnés parmi le groupe des composés des formules I-1 à I-5 et II est de 95% ou plus,
qui sont sélectionnés parmi le groupe des composés des formules I-1 à I-5 est de 60% ou plus à 70% ou moins et qui sont sélectionnés parmi le groupe des composés de la formule I-1 est de 30% ou plus à 40% ou moins.

**2.** Milieu cristallin liquide selon la revendication 1, **caractérisé en ce qu'**il présente une valeur du quotient du temps de crête et du carré de la biréfringence ($t_{max}/\Delta n^2$) de 22 ms ou moins.

**3.** Milieu cristallin liquide selon au moins l'une des revendications 1 et 2, **caractérisé en ce qu'**il présente une moyenne des constantes diélectriques dans la plage de 5,5 ou plus à 6,5 ou moins.

**4.** Milieu cristallin liquide selon au moins l'une des revendications 1 à 3, **caractérisé en ce qu'**il présente une valeur absolue de l'anisotropie diélectrique dans la plage de 3,5 ou plus à 3,9 ou moins ou une biréfringence dans la plage de 0,070 à 0,100 ou les deux.

**5.** Milieu cristallin liquide selon au moins l'une des revendications 1 à 4, **caractérisé en ce qu'**il comprend :

c) un composant chiral (composant C).

**6.** Milieu cristallin liquide selon au moins l'une des revendications 1 à 5, **caractérisé en ce que** la concentration des composés des formules I-1 à I-5 et II est de 98% ou plus.

**7.** Milieu cristallin liquide selon au moins l'une des revendications 1 à 6, **caractérisé en ce que** la concentration des composés de la formule I-1 est de 32% ou plus à 39% ou moins.

**8.** Milieu cristallin liquide selon au moins l'une des revendications 1 à 7, **caractérisé en ce que** la concentration des

composés de la formule I-2 est de 18% ou plus à 32% ou moins.

9. Milieu cristallin liquide selon au moins l'une des revendications 1 à 8, **caractérisé en ce que** la concentration des composés de la formule I-3 est de 10% ou plus à 20% ou moins.

10. Milieu cristallin liquide selon au moins l'une des revendications 1 à 9, **caractérisé en ce que** la concentration des composés qui sont sélectionnés parmi le groupe des formules I-4 et I-5 est de 0% ou plus à 5% ou moins.

11. Milieu cristallin liquide selon au moins l'une des revendications 1 à 10, **caractérisé en ce qu'**il comprend un ou plusieurs composé(s) de la formule II-3a :

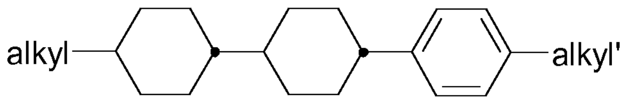

II-3a

formule dans laquelle alkyl et alkyl' représentent, indépendamment l'un de l'autre, alkyle qui comporte 1 à 7 atome(s) de C.

12. Utilisation d'un milieu cristallin liquide selon au moins l'une des revendications 1 à 11 dans un affichage électro-optique.

13. Affichage électro-optique contenant un milieu cristallin liquide selon au moins l'une des revendications 1 à 11.

14. Affichage selon la revendication 13, **caractérisé en ce qu'**il comprend un dispositif pour adresser l'affichage comportant une matrice active, telle que, par exemple, une matrice de transistors à film mince (TFT).

15. Procédé pour optimiser le temps de réponse d'un affichage à cristaux liquides, **caractérisé en ce qu'**un milieu cristallin liquide selon au moins l'une des revendications 1 à 11 est utilisé.

$$I_{(\theta_b)} = \frac{S(2\alpha_1 \sin^2\theta_b \cos^2\theta_b - \gamma_2 \cos 2\theta_b + \gamma_3)(\varepsilon_0 \Delta\varepsilon \sin 2\theta_b)^2 E_b^3}{(\alpha_1\gamma_1 + \gamma_2^2)\sin^2 2\theta_b - \gamma_1^2 - \gamma_2^2 + 2\gamma_1\gamma_3}$$

Gleichung (1)

$$t(\theta_b) = \frac{\beta_2}{2\varepsilon_0 \Delta\varepsilon E_b^2 \beta_3}\left\{-\ln\left(\frac{\tan\theta_b}{\tan\theta_0}\right) + \frac{-\beta_5 + \gamma_2\sqrt{\beta_1}}{2\beta_4\sqrt{\beta_1}}\ln\left(\frac{\beta_4 \tan^2\theta_b + \beta_7 + \sqrt{\beta_1}}{\beta_4 \tan^2\theta_0 + \beta_7 + \sqrt{\beta_1}}\right) + \frac{\beta_5 + \gamma_2\sqrt{\beta_1}}{2\beta_4\sqrt{\beta_1}}\ln\left(\frac{\beta_4 \tan^2\theta_b + \beta_7 - \sqrt{\beta_1}}{\beta_4 \tan^2\theta_0 + \beta_7 - \sqrt{\beta_1}}\right)\right\}$$

$$+ \frac{\beta_6}{2\varepsilon_0 \Delta\varepsilon E_b^2 \sqrt{\beta_1}}\ln\left[\frac{(\alpha_1 \cos 2\theta_b + \gamma_2 + \sqrt{\beta_1})(\alpha_1 \cos 2\theta_0 + \gamma_2 - \sqrt{\beta_1})}{(\alpha_1 \cos 2\theta_b + \gamma_2 - \sqrt{\beta_1})(\alpha_1 \cos 2\theta_0 + \gamma_2 + \sqrt{\beta_1})}\right]$$

Gleichung (2)

**Abbildung 1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1362839 A2
- JP 2003165977 A
- EP 1245660 A2
- WO 2004076438 A


### In der Beschreibung aufgeführte Nicht-Patentliteratur


- MVA LCD for Notebook or Mobile PCs ... **YOSHIDE, H. et al.** International Symposium, Digest of Technical Papers. 2004, vol. XXXV, 6-9
- A 46-inch TFT-LCD HDTV Technnology ... **LIU, C.T. et al.** International Symposium, Digest of Technical Papers. 2004, vol. XXXV, 750-753
- Super PVA Sets New State-of-the-Art for LCD-TV. **KIM, SANG SOO.** International Symposium, Digest of Technical Papers. 2004, vol. XXXV, 760-763
- Development of High Quality LCDTV. **SHIGETA, MITZUHIRO ; FUKUOKA, HIROFUMI.** International Symposium, Digest of Technical Papers. 2004, vol. XXXV, 754-757
- A LC Display for the TV Application. **YEO, S.D.** International Symposium, Digest of Technical Papers. 2004, vol. XXXV, 758, , 759
- **SOUK, JUN.** Seminar M-6: ''Recent Advances in LCD Technology. *Seminar Lecture Notes,* 2004, M-6, , 1-M-6, 26
- **MILLER, LAN.** LCD-Television. *Seminar Lecture Notes,* 2004, M-7, , 1 M-7, 32
- A 57-in. Wide UXGA TFT-LCD for HDTV Application. **KIM, HYEON KYEONG et al.** International Symposium, Digest of Technical Papers. 2004, vol. XXXV, 106-109
- Merck Liquid Crystals, Physical Properties of Liquid Crystals. Merck KGaA, 1997